(19) Europäisches Patentamt
European Patent Office
Office européen des brevets

(11) **EP 4 057 142 A1**

(12) **EUROPEAN PATENT APPLICATION**
published in accordance with Art. 153(4) EPC

(43) Date of publication:
**14.09.2022 Bulletin 2022/37**

(21) Application number: **20899083.8**

(22) Date of filing: **19.11.2020**

(51) International Patent Classification (IPC):
*G06F 9/50* (2006.01)

(52) Cooperative Patent Classification (CPC):
**G06F 9/50**

(86) International application number:
**PCT/CN2020/129971**

(87) International publication number:
**WO 2021/115082 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.12.2019 CN 201911253271**
**14.05.2020 CN 202010407994**

(71) Applicant: **Huawei Cloud Computing Technologies Co., Ltd.**
**Guizhou 550025 (CN)**

(72) Inventors:
• XU, Hua
 **Shenzhen, Guangdong 518129 (CN)**
• CHEN, Minglong
 **Shenzhen, Guangdong 518129 (CN)**
• BAO, Xiaoming
 **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **JOB SCHEDULING METHOD AND JOB SCHEDULING APPARATUS**

(57) This application provides a job scheduling method and a job scheduling apparatus. The method includes: receiving a target job, where the target job includes n tasks; separately performing node filtering in a node cluster based on the n tasks of the target job, to obtain n candidate node sets, where each candidate node set includes a plurality of candidate nodes; selecting a candidate node with a highest network transmission performance score from an $m^{th}$ candidate node set corresponding to an $m^{th}$ task in the n tasks as a target node of the $m^{th}$ task, where the target node of the $m^{th}$ task is used to process the $m^{th}$ task, the network transmission performance score is determined by one or any combination of an aggregation degree of the n tasks on a same rack, an affinity between the n tasks, a cross-node degree of the n tasks, and a node leisure degree, n is an integer greater than or equal to 1, and m is any positive integer between 1 and n. The technical solutions of this application can shorten runtime of a target job, and improve operation efficiency of the target job.

700

| | |
|---|---|
| Receive a target job | S710 |
| Separately perform node filtering in a node cluster based on n tasks of the target job, to obtain n candidate node sets, where each candidate node set includes a plurality of candidate nodes | S720 |
| Select a candidate node with a highest network transmission performance score from an $m^{th}$ candidate node set corresponding to an $m^{th}$ task in the n tasks as a target node of the $m^{th}$ task | S730 |

FIG. 7

## Description

This application claims priority to Chinese Patent Application No. 201911253271.7, filed with the China National Intellectual Property Administration on December 9, 2019 and entitled "TASK SCHEDULING METHOD AND SYSTEM", and claims priority to Chinese Patent Application No. 202010407994.4, filed with the China National Intellectual Property Administration on May 14, 2020 and entitled "JOB SCHEDULING METHOD AND JOB SCHEDULING APPARATUS", which are incorporated herein by reference in their entities.

## TECHNICAL FIELD

This application relates to the field of network communications technologies, and more specifically, to a job scheduling method and a job scheduling apparatus.

## BACKGROUND

Artificial intelligence (artificial intelligence, AI) is a theory, a method, a technology, and an application system that simulate, extend, and expand human intelligence by using a digital computer or a machine controlled by a digital computer, sense the environment, obtain knowledge, and use the knowledge to obtain a best result. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perceiving, inference, and decision-making functions.

In recent years, deep learning has made breakthroughs in fields such as image and voice mainly due to acquisition of massive data, continuous optimization of algorithms, and continuous growth of computing power. Currently, deep learning mainly relates to a deep neural network model. As the network model becomes increasingly complex and a data volume becomes increasingly large, a calculation amount of model training becomes extremely huge.

Currently, distributed training is usually used to meet a timeliness requirement of a job with a network transmission requirement, for example, an AI training job. If a distributed training manner is used, different jobs may contend for same hardware resources. Therefore, a scheduler is required to schedule hardware resources for different jobs of a plurality of users, to allocate appropriate nodes (for example, servers) to different jobs for operating tasks included in the jobs. A current scheduler usually allocates, based on a hardware resource requirement of a task, a node having appropriate hardware resources, and ignores a requirement for network performance in the AI training job. For example, during AI training, a network transmission requirement exists between a plurality of tasks of a same job, and this requirement is ignored in the conventional technology. Consequently, operation efficiency of the AI training job is low.

Therefore, how to improve operation efficiency of a job becomes a problem that urgently needs to be resolved.

## SUMMARY

This application provides a job scheduling method and a job scheduling apparatus, so as to shorten runtime of a target job, and improve operation efficiency of the target job.

According to a first aspect, a job scheduling method is provided, including: receiving a target job, where the target job includes n tasks; separately performing node filtering in a node cluster based on the n tasks of the target job, to obtain n candidate node sets, where each candidate node set includes a plurality of candidate nodes; and selecting a candidate node with a highest network transmission performance score from an $m^{th}$ candidate node set corresponding to an $m^{th}$ task in the n tasks as a target node of the $m^{th}$ task, where the target node of the $m^{th}$ task is used to process the $m^{th}$ task, the network transmission performance score is determined by one or any combination of an aggregation degree of the n tasks on a same rack, an affinity between the n tasks, a cross-node degree of the n tasks, and a node leisure degree, n is an integer greater than or equal to 1, and m is any positive integer between 1 and n.

In this embodiment of this application, node filtering is separately performed in the node cluster based on the n tasks of the target job, to obtain the n candidate node sets; the candidate node with the highest network transmission performance score is selected from the $m^{th}$ candidate node set corresponding to the $m^{th}$ task in the n tasks as the target node of the $m^{th}$ task, where the target node of the $m^{th}$ task is used to process the $m^{th}$ task, and the network transmission performance score is determined by one or any combination of the aggregation degree of the n tasks on the same rack, the affinity between the n tasks, the cross-node degree of the n tasks, and the node leisure degree. In this embodiment of this application, when resources are allocated to the target job, not only requirement information of the target job can be considered, but also network transmission performance of a plurality of tasks in a same job can be considered, so that a network transmission speed of the target node during operation of the target job can be increased, runtime of the target job can be further shortened, and operation efficiency of the target job can be improved.

m is any positive integer between 1 and n. For example, an initial value of m may be set to 1, and then m is set to 2, 3, 4, ..., n, to traverse the n tasks and the n candidate node sets by using m, and select n target nodes in the n candidate node sets, respectively.

With reference to the first aspect, in some implementations of the first aspect, a higher aggregation degree of the n tasks on the same rack indicates a higher network transmission performance score, and the selecting a candidate node with a highest performance score from an $m^{th}$ candidate node set corresponding to an $m^{th}$ task in the n tasks as a target node of the $m^{th}$ task includes:

determining whether the n tasks can all be placed on a rack on which a candidate node in the $m^{th}$ candidate node set is located; and if the n tasks can all be placed on the rack on which the candidate node in the $m^{th}$ candidate node set is located, increasing a performance score of the candidate node; or if the n tasks cannot all be placed on the rack on which the candidate node in the $m^{th}$ candidate node set is located, decreasing a network transmission performance score of the candidate node.

It should be understood that, the network transmission performance score of the candidate node may be determined based on the aggregation degree of the n tasks on the same rack. An objective of scoring in a dimension of the aggregation degree of the n tasks on the same rack is to place, to the greatest extent, a plurality of tasks of a single job into a same rack, to avoid cross-rack data transmission between the tasks, so that network transmission efficiency of the job can be effectively improved.

In this embodiment of this application, when the target job is scheduled, that is, when resources are allocated to the target job, the plurality of tasks included in the target job may be placed, to the greatest extent, into one or more nodes managed by a same rack, to reduce, to the greatest extent, a network transmission bandwidth occupied by cross-rack operation of the target job, to further shorten runtime of the target job, thereby improving operation efficiency of the target job.

With reference to the first aspect, in some implementations of the first aspect, a higher affinity between the n tasks indicates a higher network transmission performance score, and the selecting a candidate node with a highest network transmission performance score from an $m^{th}$ candidate node set corresponding to an $m^{th}$ task in the n tasks as a target node of the $m^{th}$ task includes:

determining a type of the $m^{th}$ task; when the type of the $m^{th}$ task is a worker node task, determining whether another worker node task or a parameter node task in the n tasks needs to be placed in the candidate node; and if the another worker node task or the parameter node task in the n tasks needs to be placed in the candidate node, increasing the network transmission performance score of the candidate node; or

when the type of the $m^{th}$ task is a parameter node task, determining whether a worker node task in the n tasks needs to be placed in the candidate node in the $m^{th}$ candidate node set, and if the worker node task in the n tasks needs to be placed in the candidate node in the $m^{th}$ candidate node set, increasing the network transmission performance score of the candidate node; and determining whether another parameter node task in the n tasks needs to be placed in the candidate node in the $m^{th}$ candidate node set, and if the another parameter node task in the n tasks needs to be placed in the candidate node in the $m^{th}$ candidate node set, decreasing the network transmission performance score of the candidate node.

It should be understood that, the tasks include a worker node task and a parameter node task. The worker node task is used to perform iterative operation of a neural network. A neural network model includes an input parameter and an output parameter. A parameter node is used to manage an input parameter and an output parameter of a worker node.

The network transmission performance score of the candidate node is determined by the affinity between different types of tasks in the n tasks. An objective of scoring by using the affinity between the different types of tasks in the n tasks is to place the worker node task and the parameter node task of the same job into a same node to the greatest extent, to ensure that internal data transmission in the job occurs in the same node to the greatest extent. In addition, a plurality of parameter node tasks of the same job are prevented, to the greatest extent, from being concentrated on the same node, to avoid a case in which when the node is faulty, the plurality of parameter node tasks are stopped, and consequently, input parameters and output parameters of the plurality of worker node tasks of the same job cannot be effectively managed.

It should be noted that, the affinity means that if an application A and an application B frequently interact with each other, it is necessary to enable, by using the affinity, the two applications to be close to each other to the greatest extent, even on a same node, to reduce performance loss brought by network communication. An anti-affinity is opposite to the affinity, and means that when applications use multi-replica deployment, it is necessary to scatter and distribute, by using the anti-affinity, application instances onto different nodes, to improve reliability. Therefore, the affinity between worker node tasks and the affinity between the worker node task and the parameter node task need to be improved, to enable the tasks to be close to each other to the greatest extent, for example, to be placed on a same node, but the affinity between parameter node tasks needs to be reduced (that is, the anti-affinity is improved), to enable the parameter node tasks to be placed on a plurality of different nodes to the greatest extent.

With reference to the first aspect, in some implementations of the first aspect, the selecting a candidate node with a highest network transmission performance score from an $m^{th}$ candidate node set corresponding to an $m^{th}$ task in the n tasks as a target node of the $m^{th}$ task includes:

determining a cross-node quantity of a candidate node in the $m^{th}$ candidate node set when the candidate node processes another job in an operating state, where when the n tasks can all be placed in the candidate node, a larger cross-node quantity indicates a larger increasing amplitude for a network transmission performance score of the candidate node, and a smaller cross-node quantity indicates a smaller increasing amplitude for the network transmission performance score of the candidate node; or

when the n tasks cannot all be placed in the candidate node, a larger cross-node quantity indicates a smaller increasing amplitude for a network transmission performance score of the candidate node, and a smaller cross-node quantity indicates a larger increasing amplitude for the network transmission performance score of the candidate node.

It should be noted that, when performance of the candidate node is scored, considering that the candidate node in the $m^{th}$ candidate node set processes the another job in the operating state, because a job whose operation ends does not occupy network transmission load, the job is not considered.

It should be understood that, scoring of the performance of the candidate node may be determined based on the cross-node degree of the n tasks. An objective of scoring by using the cross-node degree of the n tasks is to consider occupation of an inter-node bandwidth by an allocated job.

In this embodiment of this application, when the target job is scheduled, that is, when resources are allocated to the target job, evaluation may be performed by using the occupation of the inter-node transmission bandwidth by the allocated job, so that when resources are allocated to the target job, not only requirement information of the target job is considered, but also network transmission information is considered, to improve network transmission performance during operation of the target job, to further shorten runtime of the target job, thereby improving operation efficiency of the target job.

When the n tasks can all be placed in one candidate node in the $m^{th}$ candidate node set, a larger cross-node quantity of the candidate node indicates that the another job currently operated by the candidate node frequently exchanges data with another node, and if the candidate node is selected as a target node of a current task, after the current task is allocated to the target node, it can be ensured that the candidate node does not need to increase a quantity of interactions with another node. Therefore, by increasing the increasing amplitude for the performance score of the candidate node, it can be ensured that the candidate node is preferentially selected as the target node. Otherwise, a smaller cross-node quantity of the candidate node indicates that the another job currently operated by the candidate node interacts with another node for a quite small quantity of times. By reducing the increasing amplitude for the performance score of the candidate node, it can be ensured that the candidate node is not preferentially selected as the target node.

When the n tasks cannot all be placed in a candidate node in the $m^{th}$ candidate node set, a larger cross-node quantity indicates that the another job currently operated by the candidate node frequently exchanges data with another node, and if the candidate node is selected as a target node of a current task, after the current task is allocated to the target node, the candidate node is enabled to continue to increase a quantity of interactions with another node, and consequently, network performance of the candidate node deteriorates. Therefore, by reducing the increasing amplitude for the performance score of the candidate node, it can be ensured that the candidate node is not preferentially selected as the target node. Otherwise, a smaller cross-node quantity of the candidate node indicates that the another job currently operated by the candidate node interacts with another node for a quite small quantity of times. By increasing the increasing amplitude for the performance score of the candidate node, it can be ensured that the candidate node is preferentially selected as the target node. After the task of the target job is allocated to the candidate node, a quantity of times of interaction between the candidate node and another node may be appropriately increased, to optimize allocation efficiency.

With reference to the first aspect, in some implementations of the first aspect, the cross-node degree of the n tasks is determined based on a quantity of different candidate nodes to which the n tasks are allocated.

For example, when sensing network contention of a cross-node job, network transmission load of one node may be determined based on a cross-node quantity.

With reference to the first aspect, in some implementations of the first aspect, the cross-node degree of the n tasks is determined by monitoring a network real time use bandwidth.

In a possible implementation, the cross-node quantity of the n tasks may be obtained by monitoring a smoothed value of the network real time use bandwidth.

Optionally, the smoothed value of the bandwidth used in real time by the allocated job on a network link may be monitored by using a monitoring system, and is denoted as B. A current node is scored on this basis, score=1+1/(B+1), a larger cross-node quantity indicates a larger occupied bandwidth and a lower score, and a new job should be prevented from being placed on the node.

For example, a data packet may be obtained. A task ID corresponding to the data packet may be determined by viewing an IP address of the data packet. Whether a corresponding job is operated may be determined based on the task ID. A larger quantity of operated jobs indicates a larger network real time use bandwidth, and a larger cross-node degree of the n tasks.

For example, the smoothed value of the real time use bandwidth may be bandwidth load of a moment; or bandwidth load obtained by performing smoothing processing on use bandwidths of a plurality of moments within a preset time period. The smoothing processing may be taking an average value, or taking a maximum value, or taking a minimum value, or another data processing method.

With reference to the first aspect, in some implementations of the first aspect, a lower node leisure degree indicates a higher network transmission performance score, and the selecting a candidate node with a highest network transmission performance score from an $m^{th}$ candidate node set corresponding to an $m^{th}$ task in the n tasks as a target node of the $m^{th}$ task includes:

determining whether hardware resources that are of a candidate node in the $m^{th}$ candidate node set and that are used for job training are used, and if the hardware resources are used, increasing a network transmission performance score of the candidate node.

It should be understood that, scoring of the performance of the candidate node may be determined by the node leisure degree. An objective of scoring by using the node leisure degree is to keep, to the greatest extent, a node whose hardware resources used for job training are completely idle, to deal with big tasks that subsequently appear, so that the big tasks can be placed in a same node to the greatest extent, to avoid resource fragmentation. Therefore, when the hardware resources that are of the candidate node and that are used for job training are used, the performance score of the candidate node is increased, to ensure that the candidate node is preferentially selected as the target node, and the candidate node whose hardware resources used for job training are not used is not preferentially selected as the target node, so that the candidate node whose hardware resources used for job training are not used keeps idle, and the candidate node whose hardware resources used for job training are used is sufficiently used, so that resource fragmentation can be avoided.

Optionally, the hardware resources include an image processor and a central processing unit.

With reference to the first aspect, in some implementations of the first aspect, the selecting a candidate node with a highest network transmission performance score from an $m^{th}$ candidate node set corresponding to an $m^{th}$ task in the n tasks as a target node of the $m^{th}$ task further includes:

determining an allocation rate of the hardware resources that are of the candidate node in the $m^{th}$ candidate node set and that are used for job training; and increasing the network transmission performance score of the candidate node based on the allocation rate, where a higher allocation rate indicates a larger increasing amplitude for the network transmission performance score of the candidate node, and a lower allocation rate indicates a smaller increasing amplitude for the network transmission performance score of the candidate node.

When it is determined that the hardware resources that are of the candidate node and that are used for job training are already used, hardware resource usage, that is, the allocation rate of the hardware resources, is further determined. A higher allocation rate indicates more sufficient use of the hardware resources of the candidate node. In this case, it is expected that tasks are allocated to the candidate node, so that the candidate node can fully use the hardware resources of the candidate node. Therefore, the increasing amplitude for the performance score of the candidate node is increased. Otherwise, the increasing amplitude for the performance score of the candidate node is decreased.

With reference to the first aspect, in some implementations of the first aspect, each task of the target job carries a hardware resource requirement, and the separately performing node filtering in a node cluster based on the n tasks of the target job, to obtain n candidate node sets includes:

separately performing node filtering in the node cluster based on the hardware resource requirement carried in each task, to obtain the n candidate node sets, where hardware resources of each of the n candidate node sets match a hardware resource requirement carried in a corresponding task.

With reference to the first aspect, in some implementations of the first aspect, the target job includes a training job of an artificial intelligence model.

It should be understood that, the target job is a job with a network transmission load requirement during operation; and the target job may be the training job of the artificial intelligence model, or another job. This is not limited in this application.

According to a second aspect, a job scheduling apparatus is provided, including: a receiving unit, configured to: receive a target job, where the target job includes n tasks; and separately perform node filtering in a node cluster based on the n tasks of the target job, to obtain n candidate node sets, where each candidate node set includes a plurality of candidate nodes; and a processing unit, configured to select a candidate node with a highest network transmission performance score from an $m^{th}$ candidate node set corresponding to an $m^{th}$ task in the n tasks as a target node of the $m^{th}$ task, where the target node of the $m^{th}$ task is used to process the $m^{th}$ task, the network transmission performance score is determined by one or any combination of an aggregation degree of the n tasks on a same rack, an affinity between the n tasks, a cross-node degree of the n tasks, and a node leisure degree, n is an integer greater than or equal to 1, and m is any positive integer between 1 and n.

In this embodiment of this application, node filtering is separately performed in the node cluster based on the n tasks of the target job, to obtain the n candidate node sets; the candidate node with the highest network transmission performance score is selected from the $m^{th}$ candidate node set corresponding to the $m^{th}$ task in the n tasks as the target node of the $m^{th}$ task, where the target node of the $m^{th}$ task is used to process the $m^{th}$ task, and the network transmission performance score is determined by one or any combination of the aggregation degree of the n tasks on the same rack, the affinity between the n tasks, the cross-node degree of the n tasks, and the node leisure degree. In this embodiment of this application, when resources are allocated to the target job, not only requirement information of the target job can be considered, but also network transmission performance of a plurality of tasks in a same job can be considered, so that a network transmission speed of the target node during operation of the target job can be increased, runtime of the target job can be further shortened, and operation efficiency of the target job can be improved.

m is any positive integer between 1 and n. For example, an initial value of m may be set to 1, and then m is set to 2, 3, 4, ..., n, to traverse the n tasks and the n candidate node sets by using m, and select n target nodes in the n candidate node sets, respectively.

With reference to the second aspect, in some implementations of the second aspect, a higher aggregation degree of the n tasks on the same rack indicates a higher network transmission performance score, and the processing unit is specifically configured to:

determine whether the n tasks can all be placed on a rack on which a candidate node in the $m^{th}$ candidate node set is located; if the n tasks can all be placed on the rack on which the candidate node in the $m^{th}$ candidate node set is located, increase a network transmission performance score of the candidate node; or if the n tasks cannot all be placed on the rack on which the candidate node in the $m^{th}$ candidate node set is located, decrease the network transmission performance score of the candidate node.

It should be understood that, the network transmission performance score of the candidate node may be determined based on the aggregation degree of the n tasks on the same rack. An objective of scoring in a dimension of the aggregation degree of the n tasks on the same rack is to place, to the greatest extent, a plurality of tasks of a single job into a same rack, to avoid cross-rack data transmission between the tasks, so that network transmission efficiency of the job can be effectively improved.

In this embodiment of this application, when the target job is scheduled, that is, when resources are allocated to the target job, the plurality of tasks included in the target job may be placed, to the greatest extent, into one or more nodes managed by a same rack, to reduce, to the greatest extent, a network transmission bandwidth occupied by cross-rack operation of the target job, to further shorten runtime of the target job, thereby improving operation efficiency of the target job.

With reference to the second aspect, in some implementations of the second aspect, a higher affinity between the n tasks indicates a higher network transmission performance score, and the processing unit is specifically configured to:

determine a type of the $m^{th}$ task; when the type of the $m^{th}$ task is a worker node task, determine whether another worker node task or a parameter node task in the n tasks needs to be placed in the candidate node; and if the another worker node task or the parameter node task in the n tasks needs to be placed in the candidate node, increase the network transmission performance score of the candidate node; or

when the type of the $m^{th}$ task is a parameter node task, determine whether a worker node task in the n tasks needs to be placed in the candidate node in the $m^{th}$ candidate node set; and if the worker node task in the n tasks needs to be placed in the candidate node in the $m^{th}$ candidate node set, increase the network transmission performance score of the candidate node; and determine whether another parameter node task in the n tasks needs to be placed in the candidate node in the $m^{th}$ candidate node set, and if the another parameter node task in the n tasks needs to be placed in the candidate node in the $m^{th}$ candidate node set, decrease the network transmission performance score of the candidate node.

It should be understood that, the tasks include a worker node task and a parameter node task. The worker node task is used to perform iterative operation of a neural network. A neural network model includes an input parameter and an output parameter. A parameter node is used to manage an input parameter and an output parameter of a worker node.

The network transmission performance score of the candidate node is determined by the affinity between different types of tasks in the n tasks. An objective of scoring by using the affinity between the different types of tasks in the n tasks is to place the worker node task and the parameter node task of the same job into a same node to the greatest extent, to ensure that internal data transmission in the job occurs in the same node to the greatest extent. In addition, a plurality of parameter node tasks of the same job are prevented, to the greatest extent, from being concentrated on the same node, to avoid a case in which when the node is faulty, the plurality of parameter node tasks are stopped, and consequently, input parameters and output parameters of the plurality of worker node tasks of the same job cannot be effectively managed.

It should be noted that, the affinity means that if an application A and an application B frequently interact with each other, it is necessary to enable, by using the affinity, the two applications to be close to each other to the greatest extent, even on a same node, to reduce performance loss brought by network communication. An anti-affinity is opposite to the affinity, and means that when applications use multi-replica deployment, it is necessary to scatter and distribute, by using the anti-affinity, application instances onto different nodes, to improve reliability. Therefore, the affinity between worker node tasks and the affinity between the worker node task and the parameter node task need to be improved, to enable the tasks to be close to each other to the greatest extent, for example, to be placed on a same node, but the affinity between parameter node tasks needs to be reduced (that is, the anti-affinity is improved), to enable the parameter node tasks to be placed on a plurality of different nodes to the greatest extent.

With reference to the second aspect, in some implementations of the second aspect, the processing unit is specifically configured to:

determine a cross-node quantity of a candidate node in the $m^{th}$ candidate node set when the candidate node processes another job in an operating state, where when the n tasks can all be placed in the candidate node, a larger cross-node quantity indicates a larger increasing amplitude for the network transmission performance score of the candidate node, and a smaller cross-node quantity indicates a smaller increasing amplitude for the network transmission performance score of the candidate node; or

when the n tasks cannot all be placed in the candidate node, a larger cross-node quantity indicates a smaller increasing amplitude for the network transmission performance score of the candidate node, and a smaller cross-node quantity indicates a larger increasing amplitude for the network transmission performance score of the candidate node.

It should be noted that, when performance of the candidate node is scored, considering that the candidate node in the $m^{th}$ candidate node set processes the another job in the operating state, because a job whose operation ends does not occupy network transmission load, the job is not considered.

It should be understood that, scoring of the performance of the candidate node may be determined based on the cross-node degree of the n tasks. An objective of scoring by using the cross-node degree of the n tasks is to consider occupation of an inter-node bandwidth by an allocated job.

In this embodiment of this application, when the target job is scheduled, that is, when resources are allocated to the target job, evaluation may be performed by using the occupation of the inter-node transmission bandwidth by the allocated job, so that when resources are allocated to the target job, not only requirement information of the target job is considered, but also network transmission information is considered, to improve network transmission performance during operation of the target job, to further shorten runtime of the target job, thereby improving operation efficiency of the target job.

When the n tasks can all be placed in one candidate node in the $m^{th}$ candidate node set, a larger cross-node quantity of the candidate node indicates that the another job currently operated by the candidate node frequently exchanges data with another node, and if the candidate node is selected as a target node of a current task, after the current task is allocated to the target node, it can be ensured that the candidate node does not need to increase a quantity of interactions with another node. Therefore, by increasing the increasing amplitude for the performance score of the candidate node, it can be ensured that the candidate node is preferentially selected as the target node. Otherwise, a smaller cross-node quantity of the candidate node indicates that the another job currently operated by the candidate node interacts with another node for a quite small quantity of times. By reducing the increasing amplitude for the performance score of the candidate node, it can be ensured that the candidate node is not preferentially selected as the target node.

When the n tasks cannot all be placed in a candidate node in the $m^{th}$ candidate node set, a larger cross-node quantity indicates that the another job currently operated by the candidate node frequently exchanges data with another node, and if the candidate node is selected as a target node of a current task, after the current task is allocated to the target node, the candidate node is enabled to continue to increase a quantity of interactions with another node, and consequently, network performance of the candidate node deteriorates. Therefore, by reducing the increasing amplitude for the performance score of the candidate node, it can be ensured that the candidate node is not preferentially selected as the target node. Otherwise, a smaller cross-node quantity of the candidate node indicates that the another job currently operated by the candidate node interacts with another node for a quite small quantity of times. By increasing the increasing amplitude for the performance score of the candidate node, it can be ensured that the candidate node is preferentially selected as the target node. After the task of the target job is allocated to the candidate node, a quantity of times of interaction between the candidate node and another node may be appropriately increased, to optimize allocation efficiency.

With reference to the second aspect, in some implementations of the second aspect, the cross-node degree of the n tasks is determined based on a quantity of different candidate nodes to which the n tasks are allocated.

For example, when sensing network contention of a cross-node job, network transmission load of one node may be determined based on a cross-node quantity.

With reference to the second aspect, in some implementations of the second aspect, the cross-node degree of the n tasks is determined by monitoring a network real time use bandwidth.

In a possible implementation, the cross-node quantity of the n tasks may be obtained by monitoring a smoothed value of the network real time use bandwidth.

Optionally, the smoothed value of the bandwidth used in real time by the allocated job on a network link may be monitored by using a monitoring system, and is denoted as B. A current node is scored on this basis, score= $1+1/(B+1)$, a larger cross-node quantity indicates a larger occupied bandwidth and a lower score, and a new job should be prevented from being placed on the node.

For example, a data packet may be obtained. A task ID corresponding to the data packet may be determined by viewing an IP address of the data packet. Whether a corresponding job is operated may be determined based on the task ID. A larger quantity of operated jobs indicates a larger network real time use bandwidth, and a larger cross-node degree of the n tasks.

For example, the smoothed value of the real time use bandwidth may be bandwidth load of a moment; or bandwidth load obtained by performing smoothing processing on use bandwidths of a plurality of moments within a preset time period. The smoothing processing may be taking an average value, or taking a maximum value, or taking a minimum value, or another data processing method.

With reference to the second aspect, in some implementations of the second aspect, a lower node leisure degree indicates a higher network transmission performance score, and the processing unit is specifically configured to: determine whether hardware resources that are of a candidate node in the $m^{th}$ candidate node set and that are used for job training are used, and if the hardware resources are used, increase a network transmission performance score of the candidate node.

It should be understood that, scoring of the performance of the candidate node may be determined by the node leisure degree. An objective of scoring by using the node leisure degree is to keep, to the greatest extent, a node whose hardware resources used for job training are completely idle, to deal with big tasks that subsequently appear, so that the big tasks can be placed in a same node to the greatest extent, to avoid resource fragmentation. Therefore, when the hardware resources that are of the candidate node and that are used for job training are used, the performance score of the candidate node is increased, to ensure that the candidate node is preferentially selected as the target node, and the candidate node whose hardware resources used for job training are not used is not preferentially selected as the target node, so that the candidate node whose hardware resources used for job training are not used keeps idle, and the candidate node whose hardware resources used for job training are used is sufficiently used, so that resource fragmentation can be avoided.

Optionally, the hardware resources include an image processor and a central processing unit.

With reference to the second aspect, in some implementations of the second aspect, the processing unit is further configured to:
determine an allocation rate of the hardware resources that are of the candidate node in the $m^{th}$ candidate node set and that are used for job training; and increase the network transmission performance score of the candidate node based on the allocation rate, where a higher allocation rate indicates a larger increasing amplitude for the network transmission performance score of the candidate node, and a lower allocation rate indicates a smaller increasing amplitude for the network transmission performance score of the candidate node.

When it is determined that the hardware resources that are of the candidate node and that are used for job training are already used, hardware resource usage, that is, the allocation rate of the hardware resources, is further determined. A higher allocation rate indicates more sufficient use of the hardware resources of the candidate node. In this case, it is expected that tasks are allocated to the candidate node, so that the candidate node can fully use the hardware resources of the candidate node. Therefore, the increasing amplitude for the performance score of the candidate node is increased. Otherwise, the increasing amplitude for the performance score of the candidate node is decreased.

With reference to the second aspect, in some implementations of the second aspect, each task of the target job carries a hardware resource requirement, and the processing unit is specifically configured to:
separately perform node filtering in the node cluster based on the hardware resource requirement carried in each task, to obtain the n candidate node sets, where hardware resources of each of the n candidate node sets match a hardware resource requirement carried in a corresponding task.

With reference to the second aspect, in some implementations of the second aspect, the target job includes a training job of an artificial intelligence model.

It should be understood that, the target job is a job with a network transmission load requirement during operation; and the target job may be the training job of the artificial intelligence model, or another job. This is not limited in this application.

According to a third aspect, a job scheduling apparatus is provided, including: a memory, configured to store programs; and a processor, configured to execute the programs stored in the memory, where when the programs stored in the memory are executed, the processor is configured to perform the following steps: receiving a target job, where the target job includes n tasks; separately performing node filtering in a node cluster based on the n tasks of the target job, to obtain n candidate node sets, where each candidate node set includes a plurality of candidate nodes; selecting a candidate node with a highest network transmission performance score from an $m^{th}$ candidate node set corresponding to an $m^{th}$ task in the n tasks as a target node of the $m^{th}$ task, where the target node of the $m^{th}$ task is used to process the $m^{th}$ task, the network transmission performance score is determined by one or any combination of an aggregation degree of the n tasks on a same rack, an affinity between the n tasks, a cross-node degree of the n tasks, and a node leisure degree n is an integer greater than or equal to 1, and m is any positive integer between 1 and n.

In a possible implementation, the processor included in the job scheduling apparatus is further configured to perform the method in the first aspect and any implementation of the first aspect.

It should be understood that the extension, limitation, explanation, and description of related content in the first aspect are also applicable to the same content in the third aspect.

In this embodiment of this application, node filtering is separately performed in the node cluster based on the n tasks of the target job, to obtain the n candidate node sets; the candidate node with the highest network transmission performance score is selected from the $m^{th}$ candidate node set corresponding to the $m^{th}$ task in the n tasks as the target node of the $m^{th}$ task, where the target node of the $m^{th}$ task is used to process the $m^{th}$ task, and the network transmission performance score is determined by one or any combination of the aggregation degree of the n tasks on the same rack, the affinity between the n tasks, the cross-node degree of the n tasks, and the node leisure degree. In this embodiment of this application, when resources are allocated to the target job, not only requirement information of the target job can be considered, but also network transmission performance of a plurality of tasks in a same job can be considered, so that a network transmission speed of the target node during operation of the target job can be increased, runtime of the target job can be further shortened, and operation efficiency of the target job can be improved.

According to a fourth aspect, a computer storage medium is provided. The computer storage medium stores program code, and the program code includes instructions used for performing steps in the job scheduling method in the first aspect and any implementation of the first aspect.

The storage medium may be specifically a nonvolatile storage medium.

According to a fifth aspect, a chip is provided. The chip includes a processor and a data interface. The processor reads, by using the data interface, instructions stored in a memory, to perform the job scheduling method in the first aspect and any implementation of the first aspect.

Optionally, in an implementation, the chip may further include a memory, the memory stores instructions, the processor is configured to execute the instructions stored in the memory, and when the instructions are executed, the processor is configured to perform the job scheduling method in the first aspect and any implementation of the first aspect.

**BRIEF DESCRIPTION OF DRAWINGS**

FIG. 1 is a schematic diagram of a typical fully connected network model according to an embodiment of this application;

FIG. 2 is a schematic diagram of a training procedure of a neural network model according to an embodiment of this application;

FIG. 3 is a schematic diagram of distributed training of a parameter node manner according to an embodiment of this application;

FIG. 4 is a schematic diagram of distributed training of a decentralized parameter synchronization manner according to an embodiment of this application;

FIG. 5 is a schematic diagram of a system architecture of AI training according to an embodiment of this application;

FIG. 6 is a schematic diagram of a physical architecture of an AI training job according to an embodiment of this application;

FIG. 7 is a schematic flowchart of a job scheduling method according to an embodiment of this application;

FIG. 8 is a schematic flowchart of a job scheduling method according to an embodiment of this application;

FIG. 9 is a schematic flowchart of a job scheduling method according to an embodiment of this application;
FIG. 10 is a schematic diagram of a job scheduling apparatus according to an embodiment of this application; and
FIG. 11 is a schematic diagram of a job scheduling apparatus according to an embodiment of this application.

## DESCRIPTION OF EMBODIMENTS

The following describes technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

It should be understood that, in embodiments of this application, "first", "second", "third", "fourth", and the like are merely intended to refer to different objects, and do not mean that the referred objects are limited otherwise.

Because embodiments of this application use a large quantity of technical terms, for ease of understanding, the following first describes related terms and concepts that may be used in embodiments of this application.

1. Deep neural network

The deep neural network (deep neural network, DNN) is also referred to as a multi-layer neural network, and may be understood as a neural network having a plurality of hidden layers. The DNN is divided based on positions of different layers. Neural networks inside the DNN may be classified into three types: an input layer, a hidden layer, and an output layer. Generally, a first layer is the input layer, a last layer is the output layer, and a middle layer is the hidden layer. Layers are fully connected. To be specific, any neuron at an $i^{th}$ layer is necessarily connected to any neuron at an $(i + 1)^{th}$ layer.

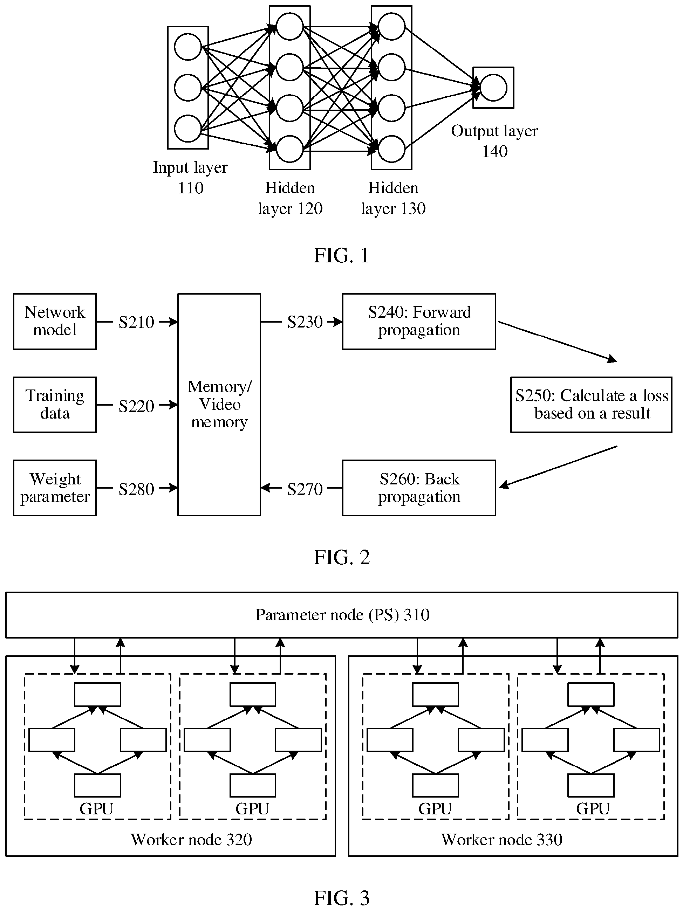

For example, FIG. 1 shows a typical fully connected network model, including an input layer 110, a hidden layer 120, a hidden layer 130, and an output layer 140. Data flows in from the input layer 110, is calculated gradually, and a result is finally obtained from the output layer 140. Each layer in the middle has several parameters, which are calculated with an input of a previous layer to obtain an output. Model parameters need a large amount of data, which is fitted through model training, to obtain an optimal model effect.

2. Training procedure of a neural network model

For example, FIG. 2 is a schematic diagram of a training procedure of a neural network model according to an embodiment of this application. The training procedure includes step S210 to step S280. The following describes step S210 to step S280 in detail.

S210: Load a network model for the first time.

S220: Input training data into the network model.

S230: Initialize parameters of the network model based on the training data.

S240: Forward propagation.

A forward propagation algorithm is to perform a series of linear and activation operations by using several weight coefficient matrices W, a bias vector b, and an input value vector x. To be specific, layer-by-layer backward calculation starts to be performed from an input layer, until operation is performed at an output layer to obtain an output result.

S250: Calculate a loss based on the result.

For example, in a deep neural network training process, because it is expected that an output of a deep neural network is close, to the greatest extent, to a value that is actually expected to be obtained through prediction, a weight vector of each layer of the neural network may be updated by comparing a predicted value of a current network with an actually desired target value, and then based on a difference between the two values (certainly, before the first update, there is usually an initialization process, to be specific, parameters are preconfigured for each layer in the deep neural network). For example, if the predicted value of the network is high, the weight vector is adjusted to enable the predicted value to be lower, and adjustment is continuously performed until the deep neural network can predict the actually desired target value or a value that is quite close to the actually desired target value.

Therefore, "how to obtain, through comparison, a difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network becomes a process of reducing the loss as much as possible.

S260: Back propagation.

For example, in a training process, a neural network may correct values of parameters in an initial neural network model by using an error back propagation (back propagation, BP) algorithm, so that a reconstruction error loss of the neural network model becomes increasingly smaller. Specifically, an input signal is forward transferred until an error loss occurs during output, and the parameters in the initial neural network model are updated based on back propagation error loss information, so that the error loss is reduced. The back propagation algorithm is a back propagation motion mainly dependent on the error loss, and aims to obtain parameters of an optimal neural network model, for example, a weight matrix.

S270: Continuously update the parameters of the network model.

S280: Save parameters or weights of the network model.

The training process of the network model requires a large amount of iterative training (thousands of times) to obtain final model parameter values, and meet a corresponding task requirement. Therefore, model training of the deep neural network is usually a time-consuming process.

3. Distributed AI model training

As the network model becomes increasingly complex and a data volume becomes increasingly large, a calculation amount of model training becomes extremely huge. Therefore, distributed training is used to meet a timeliness requirement of model generation. Distributed training means collaborative training by using central processing unit (central processing unit, CPU) or GPU devices of a plurality of nodes. Currently, mainstream distributed training manners include a centralized parameter node manner and a decentralized ALLReduce manner. The following uses distributed training of a GPU for description. It should be understood that a CPU is similar to the GPU, except that only the CPU functions as a computing device of a worker node.

FIG. 3 is a schematic diagram of a parameter node manner according to an embodiment of this application.

As shown in FIG. 3, a parameter node (parameter server, PS) 310, a worker node 320, and a worker node 330 may be included.

The parameter node and the worker node may be implemented by using a server, the server used to implement the parameter node may include at least one CPU, the server used to implement the worker node may include at least one CPU and at least one GPU, and the at least one GPU is used for job training.

For example, the parameter node 310 is a central synchronization node of a model during machine learning model training, and is responsible for maintaining parameters of the model, updating the parameters during iterative training, distributing the parameters to different devices to update the model, and continuing training. Each GPU participating in training has a same neural network model, and the GPUs may be on different nodes. CPUs of respective nodes (for example, the worker node 320 or the worker node 330) send instructions to invoke GPUs to perform model calculation processing. During each iteration, different GPUs process different batches of data. After the iteration ends, the GPUs need to synchronize parameters with the parameter node 310, to ensure consistency between parameters on different GPUs in a model training process.

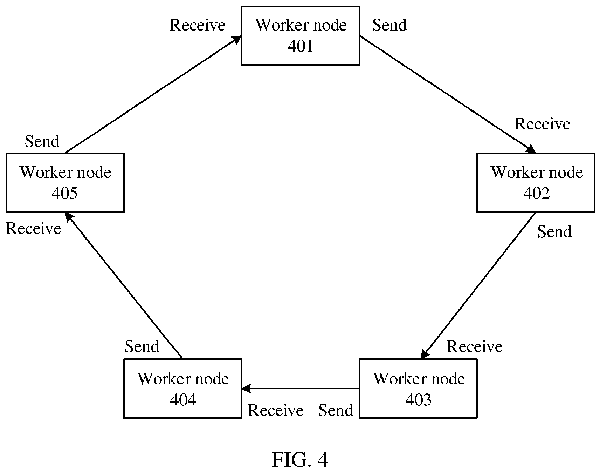

FIG. 4 is a schematic diagram of a decentralized parameter synchronization manner according to an embodiment of this application.

Different from the parameter node manner shown in FIG. 3, in this mode, a plurality of worker nodes (for example, a worker node 401 to a worker node 405) may directly synchronize parameters or gradient values through network exchange, and the parameters or gradient values may not need to be synchronized by using a parameter node (also referred to as a parameter server).

Either in the distributed training method shown in FIG. 3 or the distributed training method shown in FIG. 4, a large quantity of model parameters need to be transmitted between nodes during each iteration, for example, from different levels such as an MB level and a GB level. Therefore, in a distributed training process, a quite high requirement is posed on a network transmission bandwidth between nodes.

4. AI training job scheduling

In a cloud data center scenario, a plurality of users share a resource pool, and a mode in which a single person exclusively uses dedicated resources no longer exists. Therefore, a dedicated scheduler is required to schedule jobs of different users and select appropriate nodes for different tasks of a job for operation. On one hand, requirements of the job for hardware and software environments need to be satisfied. On the other hand, utilization of resources also needs to be improved, to achieve a core objective of resource sharing, that is, time division multiplexing. In other words, for an AI training job, if distributed training is used, different jobs may contend for network resources in a same link. In this case, the scheduler is required to schedule resources for different jobs of a plurality of users, and select appropriate nodes and GPUs for different jobs to accommodate tasks.

Currently, distributed training is usually used to meet a timeliness requirement of a job with a network transmission requirement, for example, an AI training job. If a distributed training manner is used, different jobs may contend for same hardware resources. Therefore, the scheduler is required to schedule hardware resources for different jobs of a plurality of users, to allocate appropriate nodes (for example, servers) to different jobs for operating tasks included in the jobs. A current scheduler usually allocates, based on a hardware resource requirement of a task, a node having appropriate hardware resources, and ignores a requirement for network performance in the AI training job. For example, during AI training, a network transmission requirement exists between a plurality of tasks of a same job, and this requirement is ignored in the conventional technology. Consequently, operation efficiency of the AI training job is low.

In view of this, this application provides a job scheduling method and a job scheduling apparatus. Node filtering is separately performed in a node cluster based on n tasks of a target job, to obtain n candidate node sets; a candidate node with a highest network transmission performance score is selected from an $m^{th}$ candidate node set corresponding to an $m^{th}$ task in the n tasks as a target node of the $m^{th}$ task, where the target node of the $m^{th}$ task is used to process the $m^{th}$ task, and a network transmission performance score is determined by one or any combination of an aggregation degree of the n tasks on a same rack, an affinity between the n tasks, a cross-node degree of the n tasks, and a node leisure degree. In this embodiment of this application, when resources are allocated to the target job, not only requirement information of the target job can be considered, but also network transmission performance of a plurality of tasks in a same job can be considered, so that a network transmission speed of the target node during operation of the target job can be increased, runtime of the target job can be further shortened, and operation efficiency of the target job can be improved.

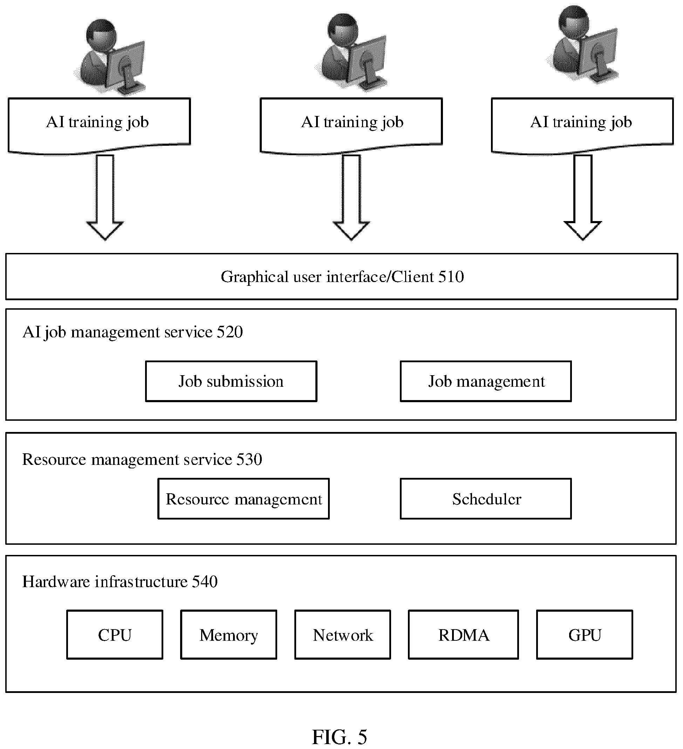

FIG. 5 is a schematic diagram of a system architecture of AI training according to an embodiment of this application.

As shown in FIG. 5, the system architecture may include a graphical user interface/client 510, an AI job management server 520, a resource management server 530, and a hardware infrastructure 540.

Schematically, the graphical user interface/client 510 may be configured to receive AI training jobs from different users. The AI job management server 520 may be configured to manage and submit AI training jobs received from different users. The resource management server 530 may include a resource manager and a scheduler, where the resource manager may be configured to bind and release resources, and the scheduler may schedule resources for jobs based on requirements of different jobs. The hardware infrastructure 540 may be a CPU, a memory, a network, a GPU, and a remote direct memory access (remote direct memory access, RDMA).

For example, a user may submit an AI training job by using the graphical user interface/client 510. After receiving a request, the AI job management server 520 may parse the job, and submit the resource request to the resource management server 530. After receiving the request, the resource management server 530 may select an appropriate node from the managed hardware infrastructure 540, namely, an underlying physical resource by using the scheduler, for job placement. After selecting the node, the scheduler starts the corresponding AI training job on the corresponding node. Resources in this part are occupied by the job and are released after the job ends.

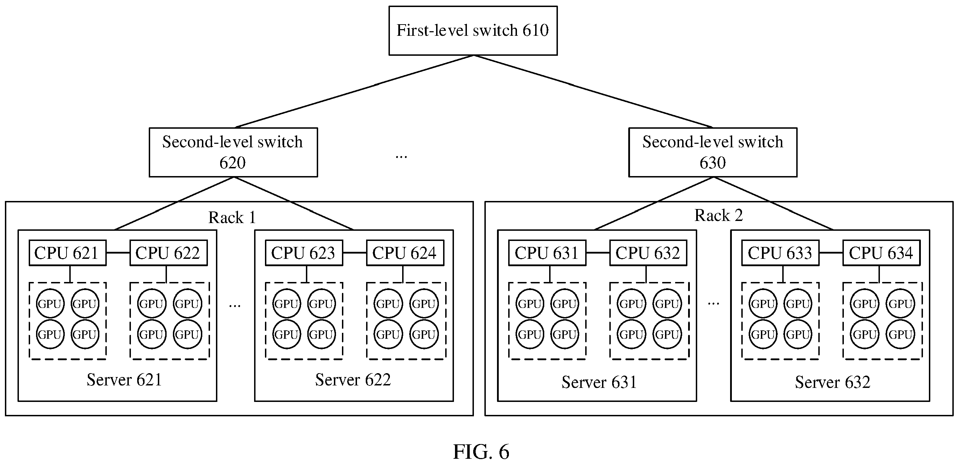

With reference to FIG. 6, the following describes a diagram of a physical architecture of a data center used for an AI training job.

FIG. 6 is a schematic diagram of a physical architecture of a data center used for an AI training job according to an embodiment of this application.

As shown in FIG. 6, the physical architecture may include a first-level switch 610, a second-level switch 620, and a second-level switch 630. The first-level switch 610 may be configured to manage the second-level switch 620 and the second-level switch 630. The second-level switch 620 may be configured to manage a server 621 and a server 622. The second-level switch 630 may be configured to manage a server 631 and a server 632.

For example, the first-level switch 610 may be a core switch. The second-level switch 620 and the second-level switch 630 may be top-of-rack switches. The top-of-rack switch may be connected to a plurality of servers, and each server includes CPU and GPU resources. The server may be a node in this embodiment of this application.

It should be noted that, the physical architecture may alternatively include one level or a plurality of levels of switches. Two levels of switches, namely, the first-level switch and the second-level switch, are used as an example in FIG. 6 for description. This is not limited in this embodiment of this application.

It should be noted that, the second-level switch 620, the server 621, and the server 622 are disposed in a same rack, for example, a rack 1, and the second-level switch 630, the server 631, and the server 632 are disposed in a same rack, for example, a rack 2.

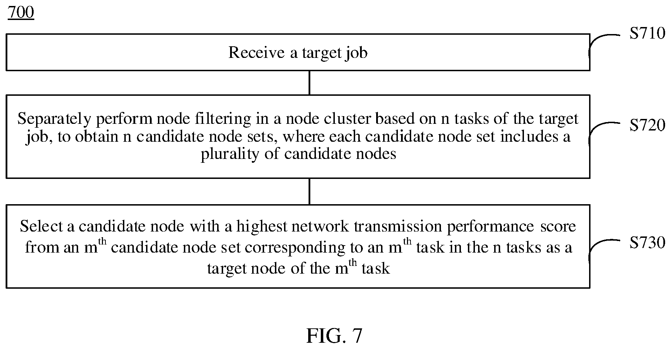

The following describes in detail a job scheduling method in embodiments of this application with reference to FIG. 7.

The job scheduling method shown in FIG. 7 may be performed by the scheduler shown in FIG. 5, and may be applied to the physical architecture shown in FIG. 6. The method 700 shown in FIG. 7 includes steps S710 to S730. The following describes these steps in detail separately.

S710: Receive a target job, where the target job includes n tasks.

In an example, a resource request of the target job may be received. The resource request may be used to request resources for operating the target job. The resource request may carry requirement information of the target job. The target job is a job with a network transmission requirement during operation.

For example, a hardware resource requirement carried in the job may be received; the scheduler may separately perform node filtering in a node cluster based on the hardware resource requirement carried in each task, to obtain n candidate node sets, where hardware resources of each of the n candidate node sets match a hardware resource requirement carried in a corresponding task.

For example, the target job may be an AI training job, or another type of job with a network transmission requirement.

In an example, resource requests of a plurality of target jobs may be alternatively received. The resource requests of the plurality of target jobs may be resource requests of a plurality of target jobs from different users or a same user, and one target job in the plurality of target jobs may include a plurality of target tasks.

S720: Separately perform node filtering in the node cluster based on the n tasks of the target job, to obtain the n candidate node sets.

Each candidate node set includes a plurality of candidate nodes.

For example, the hardware resource request carried in the job may be received; the scheduler may separately perform node filtering in the node cluster based on the hardware resource requirement carried in each task, to obtain the n candidate node sets, where the hardware resources of each of the n candidate node sets match a hardware resource requirement carried in a corresponding task.

The hardware resource requirement may be finding, through port filtering, node label matching, or the like, a node that meets a condition, for example, a type of a GPU included in the node.

For example, node port filtering may mean that the job may be operated in another node beyond a port number; and node label matching may mean selecting, based on an IP address range, a node for operating the target job.

The node filtering method in step S720 may be a common method of a scheduler in the conventional technology, and this is not limited herein.

S730: Select a candidate node with a highest network transmission performance score from an $m^{th}$ candidate node set corresponding to an $m^{th}$ task in the n tasks as a target node of the $m^{th}$ task.

The target node of the $m^{th}$ task is used to process the $m^{th}$ task, the network transmission performance score is determined by one or any combination of an aggregation degree of the n tasks on a same rack, an affinity between the n tasks, a cross-node degree of the n tasks, and a node leisure degree, n is an integer greater than or equal to 1, and m is any positive integer between 1 and n.

It should be understood that, m is any positive integer between 1 and n. For example, an initial value of m may be set to 1, and then m is set to 2, 3, 4, ..., n, to traverse the n tasks and the n candidate node sets by using m, and select n target nodes in the n candidate node sets, respectively.

In an embodiment, a higher aggregation degree of the n tasks on the same rack indicates a higher network transmission performance score, and the selecting a candidate node with a highest performance score from an $m^{th}$ candidate node set corresponding to an $m^{th}$ task in the n tasks as a target node of the $m^{th}$ task includes: determining whether the n tasks can all be placed on a rack on which a candidate node in the $m^{th}$ candidate node set is located; if the n tasks can all be placed on the rack on which the candidate node in the $m^{th}$ candidate node set is located, increasing a network transmission performance score of the candidate node; or if the n tasks cannot all be placed on the rack on which the candidate node in the $m^{th}$ candidate node set is located, decreasing the network transmission performance score of the candidate node.

It should be understood that, the network transmission performance score of the candidate node may be determined based on the aggregation degree of the n tasks on the same rack. An objective of scoring in a dimension of the aggregation degree of the n tasks on the same rack is to place, to the greatest extent, a plurality of tasks of a single job into a same rack, to avoid cross-rack data transmission between the tasks, so that network transmission efficiency of the job can be effectively improved.

For example, as shown in FIG. 6, whether the n tasks can be placed on the rack on which the candidate node in the $m^{th}$ candidate node set is located is first determined. For example, if one candidate node in the $m^{th}$ candidate node set is a server 621, whether the n tasks can be placed in a plurality of servers connected to a second-level switch 620 may be determined, to be specific, whether the n tasks can be placed in the server 621, or the server 621 and a server 622 is determined. If the n tasks can be placed in the plurality of servers connected to the second-level switch 620, a performance score of the server is increased; or if the n tasks cannot be placed in the plurality of servers included in the second-level switch 620, the performance score of the server is decreased.

For example, it is assumed that the candidate node set includes a candidate node 1 to a candidate node 4, the candidate node 1 and the candidate node 2 correspond to a rack 1, and the candidate node 3 and the candidate node 4 correspond to a rack 2. If none of all tasks included in a job is allocated, whether all the tasks can be placed on a same rack is preferentially considered. To be specific, if resources in the candidate nodes managed in the rack 1 can accommodate all the tasks of the job, the tasks are preferentially allocated to the resources in the rack 1. If at least one task in tasks included in a job is already bound to resources, for example, one task in the job is already allocated to the candidate node 1, it is preferentially considered that other tasks included in the job are allocated to the candidate node 1 or the candidate node 2 that corresponds to the same rack 1 as the candidate node 1.

In this embodiment of this application, when the target job is scheduled, that is, when resources are allocated to the target job, the plurality of tasks included in the target job may be placed, to the greatest extent, into one or more nodes managed by a same rack, to reduce, to the greatest extent, a network transmission bandwidth occupied by cross-rack operation of the target job, to further shorten runtime of the target job, thereby improving operation efficiency of the target job.

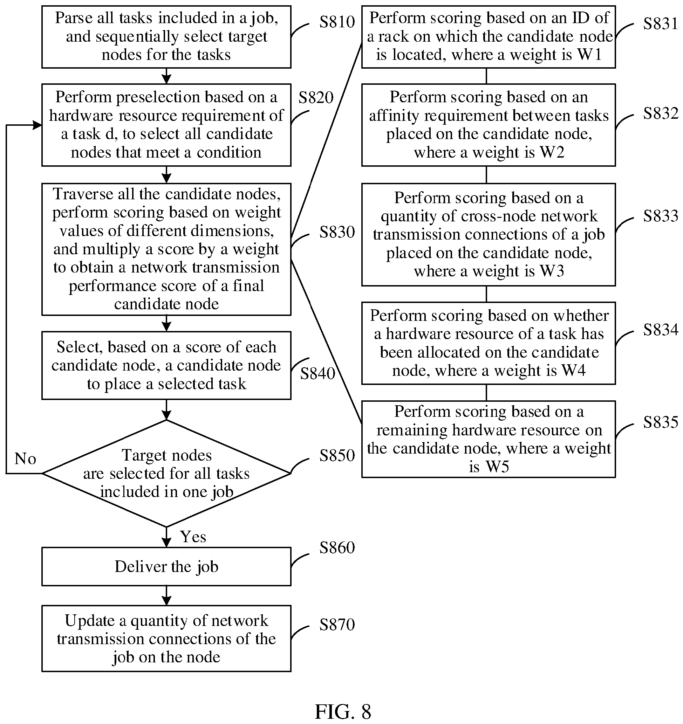

For example, for a specific implementation process of determining the performance score of the candidate node by using the aggregation degree of the n tasks on the same rack, refer to subsequent step S831 shown in FIG. 8.

In an embodiment, a higher affinity between the n tasks indicates a higher network transmission performance score, and the selecting a candidate node with a highest performance score from an $m^{th}$ candidate node set corresponding to an $m^{th}$ task in the n tasks as a target node of the $m^{th}$ task includes:

determining a type of the $m^{th}$ task; when the type of the $m^{th}$ task is a worker node task, determining whether another worker node task or a parameter node task in the n tasks needs to be placed in the candidate node in the $m^{th}$ candidate node set; and if the another worker node task or the parameter node task in the n tasks needs to be placed in the candidate node in the $m^{th}$ candidate node set, increasing the network transmission performance score of the candidate node; or

when the type of the $m^{th}$ task is a parameter node task, determining whether a worker node task in the n tasks needs to be placed in the candidate node in the $m^{th}$ candidate node set, and if the worker node task in the n tasks needs to be placed in the candidate node in the $m^{th}$ candidate node set, increasing the network transmission performance score of the candidate node; and determining whether another parameter node task in the n tasks needs to be placed in the candidate node in the $m^{th}$ candidate node set, and if the another parameter node task in the n tasks needs to be placed in the candidate node in the $m^{th}$ candidate node set, decreasing the network transmission performance score of the candidate node.

It should be understood that, the tasks include a worker node task and a parameter node task. The worker node task is used to perform iterative operation of a neural network. A neural network model includes an input parameter and an output parameter. A parameter node is used to manage an input parameter and an output parameter of a worker node.

The network transmission performance score of the candidate node is determined by the affinity between different types of tasks in the n tasks. An objective of scoring by using the affinity between the different types of tasks in the n tasks is to place the worker node task and the parameter node task of the same job into a same node to the greatest extent, to ensure that internal data transmission in the job occurs in the same node to the greatest extent. In addition, a plurality of parameter node tasks of the same job are prevented, to the greatest extent, from being concentrated on the same node, to avoid a case in which when the node is faulty, the plurality of parameter node tasks are stopped, and consequently, input parameters and output parameters of the plurality of worker node tasks of the same job cannot be effectively managed.

For example, the n tasks may include different types of tasks, such as a worker node task and a parameter node task. As shown in FIG. 4, each task in a plurality of tasks is a worker node task. When the type of the $m^{th}$ task is a worker node task, whether another worker node task or a parameter node task in the n tasks is already placed in the candidate node in the $m^{th}$ candidate node set is determined. To be specific, as shown in FIG. 6, if the $m^{th}$ task is a worker node task, whether another worker node task or a parameter node task in the n tasks is already placed in a server is determined; and if the another worker node task or the parameter node task in the n tasks is already placed in the server, a performance score of the server is increased.

For example, the n tasks may include different types of tasks, such as a worker node task and a parameter node task. As shown in FIG. 3, a parameter node 310 may also be referred to as a parameter node task. When the type of the $m^{th}$ task is a parameter node task, whether a worker node task in the n tasks is already placed in the candidate node in the $m^{th}$ candidate node set is determined. To be specific, as shown in FIG. 6, if the $m^{th}$ task is a parameter node task, whether a worker node task in the n tasks is already placed in a server is determined; if the worker node task in the n tasks is already placed in the server, a performance score of the server is increased; and whether another parameter node task in the n tasks is already placed in the server is determined, and if the another parameter node task is already placed in the server, the performance score of the server is decreased.

It should be understood that, because the worker node task frequently exchanges data with the parameter node task, in consideration of network transmission load, the worker node task and the parameter node task may be placed together to the greatest extent. Because a data volume of the parameter node task is relatively large, a plurality of parameter nodes are prevented from being placed together in a same server.

It should be noted that, the affinity means that if an application A and an application B frequently interact with each other, it is necessary to enable, by using the affinity, the two applications to be close to each other to the greatest extent, even on a same node, to reduce performance loss brought by network communication. An anti-affinity is opposite to the affinity, and means that when applications use multi-replica deployment, it is necessary to scatter and distribute, by using the anti-affinity, application instances onto different nodes, to improve reliability. Therefore, the affinity between worker node tasks and the affinity between the worker node task and the parameter node task need to be improved, to enable the tasks to be close to each other to the greatest extent, for example, to be placed on a same node, but the affinity between parameter node tasks needs to be reduced (that is, the anti-affinity is improved), to enable the parameter node tasks to be placed on a plurality of different nodes to the greatest extent.

In this embodiment of this application, by scoring by using the affinity between different types of tasks in the n tasks, the affinity between the different types of tasks and allocated resources may be considered, so that tasks of the worker node type are placed together to the greatest extent, and runtime of the target job can be further reduced, to improve operation efficiency of the target job.

The parameter node task may be a task used to be responsible for maintaining parameters of the model, and distributing the parameters to different worker nodes after updating the parameters through iterative training. The worker node task may be a task used to perform a batch of data iteration. For example, as shown in FIG. 3, the parameter node frequently exchanges data with the worker node. For example, the parameter node may send initial parameters to the worker node, and after updating the initial parameters, the worker node needs to send the updated parameters to the parameter node.

For example, for a specific implementation process of determining the performance score of the candidate node by using the affinity between the n tasks, refer to subsequent step S832 shown in FIG. 8.

In an embodiment, the selecting a candidate node with a highest network transmission performance score from an $m^{th}$ candidate node set corresponding to an $m^{th}$ task in the n tasks as a target node of the $m^{th}$ task includes:

determining a cross-node quantity of a candidate node in the $m^{th}$ candidate node set when the candidate node processes another job in an operating state, where

when the n tasks can all be placed in the candidate node in the $m^{th}$ candidate node set, a larger cross-node quantity indicates a larger increasing amplitude for the network transmission performance score of the candidate node, and a smaller cross-node quantity indicates a smaller increasing amplitude for the network transmission performance score of the candidate node; or when the n tasks cannot all be placed in a candidate node in the $m^{th}$ candidate node set, a larger cross-node quantity indicates a smaller increasing amplitude for the network transmission performance score of the candidate node, and a smaller cross-node quantity indicates a larger increasing amplitude for the network transmission performance score of the candidate node.

It should be noted that, scoring of the performance of the candidate node may be determined based on the cross-node degree of the n tasks. An objective of scoring by using the cross-node degree of the n tasks is to consider occupation of an inter-node bandwidth by an allocated job.

It should be understood that, in any one of the foregoing cases, the increasing amplitude is greater than a decreasing amplitude. For a job that does not require cross-node allocation, the job is preferentially allocated to a candidate node with a large cross-node quantity, and for a job that requires cross-node allocation, the job is preferentially placed in a candidate node with a small cross-node quantity.

It should be further understood that, when performance of the candidate node is scored, considering that the candidate node in the $m^{th}$ candidate node set processes the another job in the operating state, because a job whose operation ends does not occupy network transmission load, the job is not considered.

In this embodiment of this application, scoring is performed by using the cross-node degree of the n tasks, and the occupation of the inter-node transmission bandwidth by the allocated job may be considered, so that when resources are allocated to the target job, not only requirement information of the target job is considered, but also network transmission information is considered, to improve network transmission performance during operation of the target job, to further shorten runtime of the target job, thereby improving operation efficiency of the target job.

When the n tasks can all be placed in one candidate node in the $m^{th}$ candidate node set, a larger cross-node quantity of the candidate node indicates that the another job currently operated by the candidate node frequently exchanges data with another node, and if the candidate node is selected as a target node of a current task, after the current task is allocated to the target node, it can be ensured that the candidate node does not need to increase a quantity of interactions with another node. Therefore, by increasing the increasing amplitude for the performance score of the candidate node, it can be ensured that the candidate node is preferentially selected as the target node. Otherwise, a smaller cross-node quantity of the candidate node indicates that the another job currently operated by the candidate node interacts with another node for a quite small quantity of times. By reducing the increasing amplitude for the performance score of the candidate node, it can be ensured that the candidate node is not preferentially selected as the target node.

When the n tasks cannot all be placed in a candidate node in the m^th candidate node set, a larger cross-node quantity indicates that the another job currently operated by the candidate node frequently exchanges data with another node, and if the candidate node is selected as a target node of a current task, after the current task is allocated to the target node, the candidate node is enabled to continue to increase a quantity of interactions with another node, and consequently, network performance of the candidate node deteriorates. Therefore, by reducing the increasing amplitude for the performance score of the candidate node, it can be ensured that the candidate node is not preferentially selected as the target node. Otherwise, a smaller cross-node quantity of the candidate node indicates that the another job currently operated by the candidate node interacts with another node for a quite small quantity of times. By increasing the increasing amplitude for the performance score of the candidate node, it can be ensured that the candidate node is preferentially selected as the target node. After the task of the target job is allocated to the candidate node, a quantity of times of interaction between the candidate node and another node may be appropriately increased, to optimize allocation efficiency.

In a possible implementation, the cross-node degree of the n tasks is determined based on a quantity of different candidate nodes to which the n tasks are allocated.

For example, when sensing network contention of a cross-node job, the scheduler may record a quantity of network connections of the cross-node job on a node.

In a possible implementation, the cross-node degree of the n tasks is determined by monitoring a network real time use bandwidth.

For example, a smoothed value of the bandwidth used in real time by the existing job on a network link may be monitored by using a monitoring system, and is denoted as B. A current node is scored on this basis, score= 1+1/(B+1), a larger cross-node quantity indicates a larger occupied bandwidth and a lower score, and a new job should be prevented from being placed on the node.

For example, the smoothed value of the real time use bandwidth may be bandwidth load of a moment; or bandwidth load obtained by performing smoothing processing on use bandwidths of a plurality of moments within a preset time period. The smoothing processing may be taking an average value, or taking a maximum value, or taking a minimum value, or another data processing method.

For example, a data packet may be obtained. A task ID corresponding to the data packet may be determined by viewing an IP address of the data packet. Whether a corresponding job is operated may be determined based on the task ID. A larger quantity of operated jobs indicates a larger network real time use bandwidth, and a larger cross-node degree of the n tasks.

It should be understood that, because fluctuation of a network transmission bandwidth of distributed AI training is quite small, the bandwidth monitored in real time can be used to well represent a network transmission requirement of a job.

For example, as shown in FIG. 6, if the n tasks can all be placed in one server, a larger cross-node quantity of the server indicates a larger increasing amplitude for a performance score of the server, where the cross-node quantity of the server may be a quantity of other servers with which the server needs to exchange data; or an amplitude of the cross-node degree of the server may be described by monitoring a use bandwidth of the server in real time; or if the n tasks cannot all be placed in one server, a smaller cross-node quantity of the server indicates a larger increasing amplitude for the performance score of the server. In other words, for a job that does not need to be placed across servers, the job is preferentially placed in a server with a large cross-node quantity; and for a job that needs to be placed across servers, the job is preferentially placed in a server with a small cross-node quantity.

For example, for a specific implementation process of determining the performance score of the candidate node by using the cross-node degree of the n tasks, refer to subsequent step S833 shown in FIG. 8.

In an embodiment, a lower node leisure degree indicates a higher network transmission performance score, and the selecting a candidate node with a highest network transmission performance score from an m^th candidate node set corresponding to an m^th task in the n tasks as a target node of the m^th task includes:
determining whether hardware resources that are of a candidate node in the m^th candidate node set and that are used for job training are used, and if the hardware resources are used, increasing a network transmission performance score of the candidate node.

It should be understood that, scoring of the performance of the candidate node may be determined by the node leisure degree. An objective of scoring by using the node leisure degree is to keep, to the greatest extent, a node whose hardware resources used for job training are completely idle, to deal with big tasks that subsequently appear, so that the big tasks can be placed in a same node to the greatest extent, to avoid resource fragmentation. Therefore, when the hardware resources that are of the candidate node and that are used for job training are used, the performance score of the candidate node is increased, to ensure that the candidate node is preferentially selected as the target node, and the candidate node whose hardware resources used for job training are not used is not preferentially selected as the target node, so that the candidate node whose hardware resources used for job training are not used keeps idle, and the candidate node whose hardware resources used for job training are used is sufficiently used, so that resource fragmentation can be avoided.

Optionally, the hardware resources include an image processor and a central processing unit.

In an embodiment, the selecting a candidate node with a highest network transmission performance score from an $m^{th}$ candidate node set corresponding to an $m^{th}$ task in the n tasks as a target node of the $m^{th}$ task further includes:

determining an allocation rate of the hardware resources that are of the candidate node in the $m^{th}$ candidate node set and that are used for job training; and

increasing the network transmission performance score of the candidate node based on the allocation rate, where a higher allocation rate indicates a larger increasing amplitude for the network transmission performance score of the candidate node, and a lower allocation rate indicates a smaller increasing amplitude for the network transmission performance score of the candidate node.

When it is determined that the hardware resources that are of the candidate node and that are used for job training are already used, hardware resource usage, that is, the allocation rate of the hardware resources, is further determined. A higher allocation rate indicates more sufficient use of the hardware resources of the candidate node. In this case, it is expected that tasks are allocated to the candidate node, so that the candidate node can fully use the hardware resources of the candidate node. Therefore, the increasing amplitude for the performance score of the candidate node is increased. Otherwise, the increasing amplitude for the performance score of the candidate node is decreased.

For example, as shown in FIG. 6, in a server, a higher allocation rate of GPUs or CPUs indicates a smaller quantity of idle CPUs or GPUs, and a performance score of the server is increased; or a lower allocation rate of the GPUs or CPUs indicates a larger quantity of idle CPUs or GPUs, and the performance score of the server is decreased.

In this embodiment of this application, by scoring by using the node leisure degree, a completely idle GPU host can be kept to the greatest extent, so that a big task can be placed, to avoid resource fragmentation, thereby improving operation efficiency of the big task, and improving utilization of cluster resources.

For example, for a specific implementation process of scoring by using the node leisure degree, refer to subsequent step S834 and step S835 shown in FIG. 8.

The performance score of the candidate node may be determined by using one or any combination of an aggregation degree of the n tasks on a same rack, an affinity between different types of tasks in the n tasks, a cross-node degree of the n tasks, and a node leisure degree.

For example, the user may separately enable or disable policies of the foregoing several dimensions through configuration, or may enable policies in combination and define scheduling policies of different weight values.

For example, the weight values corresponding to the different evaluation dimensions may be thresholds preset based on a user requirement. Weight values of different evaluation dimensions may be set based on priorities of different evaluation dimensions. For example, if the rack aggregation degree has a highest priority among the plurality of evaluation dimensions, a value of a weight corresponding to the rack aggregation degree may be configured as a largest value of the plurality of weights.

In this embodiment of this application, node filtering is separately performed in the node cluster based on the n tasks of the target job, to obtain the n candidate node sets; performance of each candidate node in the $m^{th}$ candidate node set corresponding to the $m^{th}$ task is scored, the candidate node with the highest score is selected as the target node of the $m^{th}$ task, and the $m^{th}$ task is allocated to the target node of the $m^{th}$ task. The performance may include one or any combination of the aggregation degree of the n tasks on the same rack, the affinity between the different types of tasks in the n tasks, the cross-node degree of the n tasks, and the node leisure degree. In this embodiment of this application, when resources are allocated to the target job, not only requirement information of the target job can be considered, but also network transmission load can be considered, so that network transmission performance during operation of the target job can be improved, runtime of the target job can be further shortened, and operation efficiency of the target job can be improved.

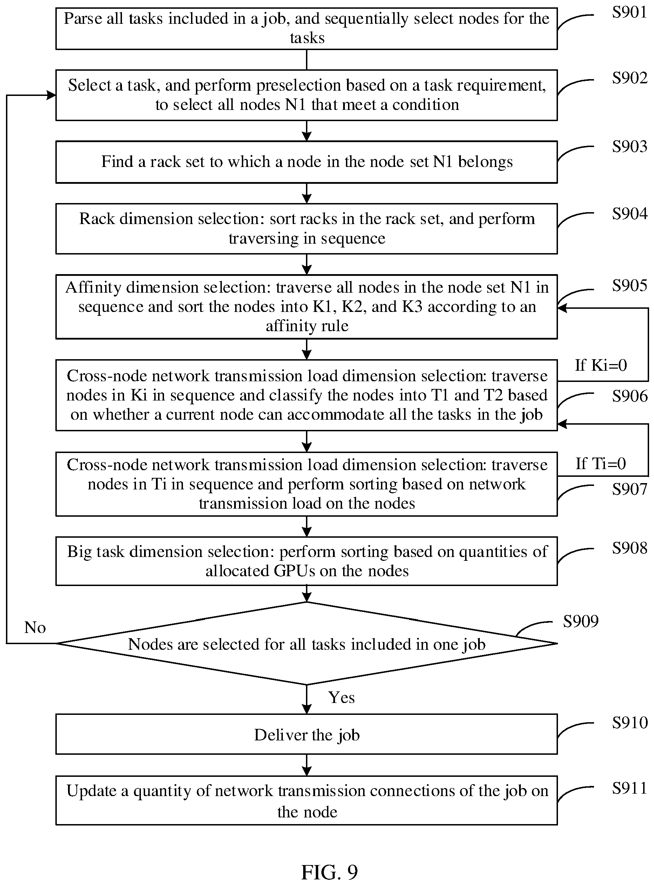

The following describes in detail a process of performing a job scheduling method by using evaluation policies of different dimensions with reference to FIG. 8 and FIG. 9.

FIG. 8 is a schematic flowchart of a job scheduling method according to an embodiment of this application. The method includes step S810 to step S870. The following separately describes these steps in detail.

S810: Parse all tasks included in a job, and sequentially select target nodes for the tasks.

The job may be an AI training job, or another job with a network transmission requirement during operation.

For example, a scheduler may obtain a job from a job queue according to a specific rule for scheduling. The rule may be a dominated resource fairness (dominated resource Fairness, DRF) algorithm or another algorithm. The scheduler parses all tasks (task) included in the job, schedules each task in sequence, and selects an appropriate node for binding, where the bound node is used to execute the task.

S820: Separately perform node filtering in a node cluster based on a hardware resource requirement carried in each task, to obtain n candidate node sets.

The hardware resource requirement may be finding, through port filtering, node label matching, or the like, a node that meets a condition, for example, a type of a GPU included in the node.

For example, node port filtering may mean that the job may be operated in another node beyond a port number; and node label matching may mean selecting, based on an IP address range, a node for operating the target job. The node preselection method in step S820 may be a common method of a scheduler in the conventional technology, and this is not limited herein.

For example, node port filtering may mean that the job may be operated in another node beyond a port number; and node label matching may mean selecting, based on an IP address range, a node for operating the target job.

S830: Traverse all candidate nodes, evaluate network transmission performance scores of the candidate nodes based on different dimensions, and finally obtain, from all the candidate nodes, a candidate node with a highest network transmission performance score.

For example, all the candidate nodes may be evaluated by using different dimensions and weights are multiplied. Finally, preferential selection is performed on the preselected candidate nodes, to obtain a node used to bind a task.

For example, step S830 may include step S831 to step S835. To be specific, network transmission performance scores of all candidate nodes may be evaluated from a rack dimension, an affinity dimension, a cross - node dimension, a big task dimension, and a hardware resource quantity dimension that are used to manage nodes.

It should be understood that, evaluation from the foregoing different dimensions may be mainly performed based on a network transmission bandwidth and from a perspective of resource fragmentation avoidance. When the network transmission bandwidth is considered, operation efficiency of the AI job can be improved; and when resource fragmentation is avoided, task placement may be considered, so that big resources are used for subsequent placement of big tasks, to improve overall utilization of resources.

S831: Evaluate the network transmission performance score from the rack dimension, where an objective of performing evaluation by using this dimension is to place, to the greatest extent, a plurality of tasks included in a single job into a same rack, to avoid cross-rack data transmission between the tasks, so that network transmission efficiency of the job can be effectively improved.

For example, a weight value w1 of this dimension may be 10000, and an evaluation value is obtained in the following manner:

1. If none of all tasks included in a job is allocated, whether the tasks can be placed from the rack dimension is considered. To be specific, whether all remaining candidate nodes of the rack can accommodate all the tasks of the job is calculated.

If the job to which the tasks belong can be placed in the candidate node, an evaluation value of a management switch to which the candidate node belongs is 1, that is, Rack, score=1; or if the job to which the tasks belong cannot be placed in the candidate node, the evaluation value of the management switch to which the candidate node belongs is -1, that is, score=-1.

2. If at least one of tasks included in a job is already bound to resources, an affinity factor for task placement is considered.

The affinity means that if an application A and an application B frequently interact with each other, it is necessary to enable, by using the affinity, the two applications to be close to each other to the greatest extent, even on a same node, to reduce performance loss brought by network communication. An anti-affinity is opposite to the affinity, and means that when applications use multi-replica deployment, it is necessary to scatter and distribute, by using the anti-affinity, application instances onto different nodes, to improve reliability.

If a same job already has a task scheduled into a rack, and if another node and a node in which the scheduled task is located are managed by the same rack, an evaluation value of the another node is 1, that is, score=1; or if the another node and the node in which the scheduled task is located are managed by different racks, the evaluation value of the another node is -1, that is, score=-1.

For example, it is assumed that a candidate node set includes a candidate node 1 to a candidate node 4, the candidate node 1 and the candidate node 2 correspond to a rack 1, and the candidate node 3 and the candidate node 4 correspond to a rack 2. If none of all tasks included in a job is allocated, whether all the tasks can be placed on a same rack is preferentially considered. To be specific, if resources in the candidate nodes in the rack 1 can accommodate all the tasks of the job, the tasks are preferentially allocated to the resources in the rack 1. If at least one task in tasks included in a job is already bound to resources, for example, one task in the job is already allocated to the candidate node 1, it is preferentially considered that other tasks included in the job are allocated to the candidate node 1 or the candidate node 2 that corresponds to the same rack 1 as the candidate node 1.

It should be understood that, the resources of the rack may be hardware resources in a server, namely, a candidate node, included in the rack. For example, the hardware resource may be a CPU, a GPU, or a memory in the server.

S832: Evaluate the network transmission performance score of the candidate node from the affinity dimension between a parameter node task PS and a worker node task worker, that is, the affinity dimension between the PS and the worker, where an objective of performing evaluation by using this dimension is to increase a network transmission bandwidth between worker nodes by placing the tasks together, and in addition, prevent, to the greatest extent, PSs from being collected in a same node, to avoid causing a bottleneck on the PSs.

It should be noted that, the parameter node PS and the worker node worker may refer to different task types. For example, as shown in FIG. 3, if a node is a parameter server 310, to be specific, the node is used to be responsible for maintaining parameters of a model, performing updating through iterative training, and distributing the parameters to different devices to update the model, the node is a PS; or if a node is a GPU in a node 320 or a node 330 and is used to perform a batch of data iteration, the node is a worker; or if a node is neither a PS nor a worker, the node is a resource that can be used for task scheduling.

For example, a weight value w2 of this dimension may be 1000, and an evaluation value is obtained in the following manner:

> 1. If the task is a worker node task (worker), and if traversed nodes already include another worker node task allocated by the job, the evaluation value of the node is 1, that is, score=1.

It should be understood that, a plurality of tasks included in one job are placed in a same node, so that the plurality of tasks of the same job can be placed together, to reduce a requirement for a transmission bandwidth between nodes, thereby improving operation efficiency of tasks.

2. If the task is a parameter node task (PS), and if traversed nodes already include a worker node task allocated by the job, the evaluation value of the node is 1, that is, score=1; or if another parameter node task is already placed in the node, the evaluation value of the node is 0.5, that is, score=-0.5.

It should be understood that, if both the PS and the worker are placed in a same node, a requirement for a transmission bandwidth may be reduced when the worker and the PS perform parameter synchronization or sharing, to improve operation efficiency of tasks. In addition, because an operation amount of the PS is relatively large, PSs in a plurality of jobs need to be prevented from being placed in a same node. To be specific, PSs in different jobs may be placed in different nodes, to prevent the PSs from being concentrated on a same node, thereby avoiding causing a bottleneck on the PSs.

S833: Evaluate the network transmission performance score of the candidate node from the cross-node dimension, where an objective of performing evaluation by using this dimension is to evaluate occupation of an inter-node bandwidth by a job to which resources are allocated.

For example, a weight value w3 of this dimension may be 100, and an evaluation value is obtained in the following manner:

Assuming that a quantity that is of network transmission connections between nodes and that is recorded by the scheduler is node.num_cross_nodesjob, and a job schedules GPU training tasks on two nodes simultaneously, quantities of network transmission connections of the two nodes are both increased by 1, and a default quantity is 0.

> 1. If a quantity of tasks included in the job is equal to 1, or remaining resources of each traversed node are greater than or equal to total resources required by the job, whether the tasks included in the job can be scheduled to the same node is determined. For a job that does not require cross-node scheduling, a node with a larger quantity of cross-node tasks has a higher priority. To be specific, a job that can satisfy resource scheduling without cross-node scheduling may be preferentially deployed in a node already bound to a relatively large quantity of cross-node tasks.

For example, the evaluation value may be:

$$score = 3 - \frac{1}{node.num\_cross\_nodes\_job + 2} ; \qquad (1)$$

2. If the quantity of tasks included in the job is not equal to 1, or the remaining resources of each traversed node are less than the total resources required by the job, for a job that requires cross-node scheduling, a node with a smaller quantity of cross-node tasks has a higher priority.

For example, the evaluation value may be:

$$score = 1 + \frac{1}{node.num\_cross\_nodes\_job + 1}; \tag{2}$$

For example, the formula (1) and the formula (2) corresponding to the evaluation value are used as examples for description. Parameters in the formulas are not limited in this application.

It should be understood that, for the foregoing case 1, if a quantity of tasks included in one job is 1 or remaining resources in each node can meet a resource requirement of the job, the job is preferentially allocated to a node with a relatively large quantity of network transmission connections (which may also be referred to as network transmission load). When the quantity of tasks included in the job is 1 or the remaining resources in each node can meet a resource requirement of the job, the job does not need to occupy a network bandwidth for cross-node transmission. Therefore, the job may be allocated to a node with a large quantity of network transmission connections.

It should be further understood that, for the foregoing case 2, because the quantity of tasks included in the job is not equal to 1, or remaining resources in each node cannot meet a resource requirement of the job, it indicates that the job may need to be allocated across nodes, and it is preferentially considered that the job is allocated to a node with a small quantity of network transmission connections. Because the cross-node job needs to occupy a network bandwidth for cross-node transmission, to improve operation efficiency of the job, it is preferentially considered that the job is allocated to the node with a small quantity of network transmission connections.

In an embodiment, when network contention of the cross-node job is sensed, a quantity of network contentions of a cross-node distributed training job on a node may be recorded.

In another embodiment, when network contention of the cross-node job is sensed, a monitoring system may be used. To be specific, a smoothed value of a bandwidth used in real time by the existing job on a network link is monitored, and the smoothed value is denoted as B. The node is scored on this basis, where score=1+1/(B+1). A larger occupied bandwidth indicates a lower score. In this case, a new distributed training job should be prevented from being placed on the node.

For example, the smoothed value of the real time use bandwidth may be bandwidth load of a moment; or bandwidth load obtained by performing smoothing processing on use bandwidths of a plurality of moments within a preset time period. The smoothing processing may be taking an average value, or taking a maximum value, or taking a minimum value, or another data processing method.

It should be noted that, because fluctuation of a network transmission bandwidth of distributed AI training is quite small, the bandwidth monitored in real time can be used to well represent a network transmission requirement of a job.

In a possible implementation, the AI training job may be alternatively another type of job with a requirement for network transmission. The network transmission requirement of the job may be automatically identified, or the job manually submits a configuration file of a network connection. Scheduling is performed by using a scheduling mechanism sensed by the network transmission load in this embodiment of this application.

S834: Evaluate the network transmission performance score of the candidate node from the big task dimension, where an objective of performing evaluation by using this dimension is to keep, to the greatest extent, completely idle hardware resources, so that big tasks can be placed, to avoid resource fragmentation.

Optionally, the hardware resources include a GPU and a CPU.

For example, the GPU is used as an example for description. A weight value w4 of this dimension may be 10, and an evaluation value is obtained in the following manner:

    1. For a node whose allocation rate of GPUs is 0, the evaluation value may be 0, that is, score=0.
    2. For a node whose allocation rate of GPUs is greater than 0, the evaluation value may be 1, that is, score=1.

It should be noted that, the allocation rate of GPUs may be a size of resources that are already allocated to tasks in the GPUs. If the allocation rate of GPUs is 0, it indicates that all GPUs on the node are in a completely idle state. S835: Perform evaluation from a GPU quantity dimension, where an objective of performing evaluation by using this dimension is to increase, to the greatest extent, a placement possibility of big GPU tasks, and preferentially place tasks full in a node with a small quantity of remaining GPU resources.

S836: Evaluate the network transmission performance score of the candidate node from a hardware resource dimension, where an objective of performing evaluation by using this dimension is to reduce resource fragmentation, increase, to the greatest extent, a possibility of placing tasks requiring big hardware resources, and preferentially place tasks full in a candidate node with a small quantity of remaining hardware resources.

For example, a weight value w5 of this dimension may be 1, and an evaluation value is obtained in the following manner:

$$score = \frac{GPU_{allocated}}{GPU_{total}};$$

where $GPU_{allocated}$ may represent a quantity of GPUs that are already occupied in the node; and $GPU_{total}$ may represent a total quantity of GPUs in the node.

It should be noted that, step S834 and step S835 may refer to a same dimension, and the network transmission performance score of the candidate node is evaluated by using the node leisure degree in both step S834 and step S835, so that completely idle hardware resources are kept to the greatest extent, so that big tasks can be placed, to avoid resource fragmentation.

It should be understood that, in the foregoing evaluation manners from different dimensions, an example in which a larger evaluation value of a node indicates a higher priority, and the node is preferentially selected for task placement is used for description. Similarly, a smaller evaluation value of a node indicates a higher priority.

It should be further understood that, the weight values w1 to w5 may be thresholds preset based on a user requirement. Weight values of different evaluation dimensions may be set based on priorities of different evaluation dimensions. For example, if the rack dimension has a highest priority among the plurality of evaluation dimensions, a value of the weight w1 corresponding to the rack dimension may be configured as a largest value in w1 to w5.

S840: Multiply the evaluation values of all the dimensions by the weights, obtain a final score of the task on each candidate node through summation, and select a node with a largest score for accommodating the task.

S850: Determine whether appropriate resources are selected for all tasks included in one job; if the appropriate resources are selected, perform S860; or if the appropriate resources are not selected, perform S820.

S860: Deliver the job.

For example, after the appropriate resources are selected for the job, the job is delivered to a corresponding target node.

S870: Update the quantity of network transmission connections of the job on the node.

For example, after all tasks are selected and obtain corresponding resources, the quantity node.num_cross_nodes_job of network transmission connections of each node is updated, and the job starts to be operated.

It should be noted that, in the job scheduling method, when preferential selection is performed, the weights of the dimensions may all be adjusted, provided that the foregoing overall objective is satisfied. To be specific, evaluation from the foregoing different dimensions may be mainly performed based on a network transmission bandwidth and from a perspective of resource fragmentation avoidance. When the network transmission bandwidth is considered, operation efficiency of the AI job can be improved; and when resource fragmentation is avoided, task placement may be considered, so that big resources are used for subsequent placement of big tasks, to improve overall utilization of resources.

It should be understood that the foregoing example descriptions are intended to help a person skilled in the art understand embodiments of this application, but are not intended to limit embodiments of this application to a specific value or a specific scenario in the examples. A person skilled in the art definitely can make various equivalent modifications or changes according to the examples described above, and the modifications or changes also fall within the scope of embodiments of this application.

In FIG. 8, evaluation is performed on a candidate node by using a plurality of dimensions in parallel. Similarly, evaluation may be alternatively performed on the candidate node by using the foregoing different dimensions in a serial manner. The following describes in detail a process of performing evaluation on a candidate node by using the foregoing different dimensions in a serial manner.

FIG. 9 is a schematic flowchart of a job scheduling method according to an embodiment of this application. The method includes step S901 to step S911. The following separately describes these steps in detail.

S901: Parse all tasks included in a job, and sequentially select nodes for the tasks.

For example, the job may be an AI training job, or another job with a network transmission requirement during operation.

For example, a scheduler may obtain a job from a job queue according to a specific rule for scheduling. The rule may be a resource fairness (dominated resource Fairness, DRF) algorithm or another algorithm. The scheduler parses all tasks (task) included in the job, schedules each task in sequence, and selects an appropriate node for binding, where the bound node is used to execute the task.

S902: Select a task, and perform preselection on resources based on a task requirement, to filter a candidate node set N1 that meets a condition.

For example, a node that meets a condition, for example, a type of a GPU included in the node, may be found through node port filtering, node label matching, or the like.

For example, node port filtering may mean that the job may be operated in another node beyond a port number; and node label matching may mean selecting, based on an IP address range, a node for operating the target job.

The node preselection method in step S902 may be a common method of a scheduler in the conventional technology, and this is not limited herein.

S903: Determine a rack set to which a candidate node in the candidate node set N1 belongs.

For example, as shown in FIG. 6, the second-level switch may be a top-of-rack switch, and servers (which may also be referred to as nodes) included in a plurality of top-of-rack switches may be interconnected.

S904: Perform evaluation from a rack dimension, where an objective of performing evaluation by using this dimension is to place, to the greatest extent, a plurality of tasks included in a single job into a same node, to improve network transmission efficiency.

For example, racks may be sorted according to a specific rule, and nodes managed by the racks are traversed based on a sequence.

A rule for sorting the racks may be as follows: If all tasks included in one job are allocated with resources, whether a node managed by a rack can accommodate a job is considered. To be specific, a rack to which a node that can accommodate all the tasks included in the job belongs is ranked forward, or otherwise, the rack is ranked backward. If some of all tasks included in one job are already allocated with resources, a rack to which a node on which the tasks are located belongs is ranked forward, or otherwise, the rack is ranked backward.

It should be noted that, for a specific implementation in step S904, refer to step S831 shown in FIG. 8. Details are not described herein again.

S905: Perform evaluation from an affinity dimension between a parameter node PS task and a worker node task, that is, the affinity dimension between the PS and the worker, where an objective of performing evaluation by using this dimension is to increase a network transmission bandwidth between worker nodes by placing the tasks together, and in addition, prevent, to the greatest extent, PSs from being collected in a same node, to avoid causing a bottleneck on the PSs.

It should be understood that, the parameter node PS and the worker node worker may refer to different task types. For example, as shown in FIG. 3, if a node is a parameter node 310, to be specific, the node is used to be responsible for maintaining parameters of a model, performing updating through iterative training, and distributing the parameters to different devices to update the model, the node is a PS; or if a node is a GPU in a node 320 or a node 330 and is used to perform a batch of data iteration, the node is a worker; or if a node is neither a PS nor a worker, the node may be a resource that can be used for task scheduling.

The affinity means that if an application A and an application B frequently interact with each other, it is necessary to enable, by using the affinity, the two applications to be close to each other to the greatest extent, even on a same node, to reduce performance loss brought by network communication.

For example, nodes managed by the racks that are sorted may be traversed in sequence, and the nodes are sorted into K1, K2, and K3 according to an affinity rule.

Sorting the nodes according to the affinity rule may be as follows: If a task of a worker type included in a job is placed in a node, the node is placed into the set K1; if a task of a PS type included in a job is placed in a node, the node is placed into the set K2; and other nodes are placed into the set K3.

It should be noted that, for a specific implementation in step S905, refer to step S832 shown in FIG. 8. Details are not described herein again.

S906: Perform evaluation from a cross-node network transmission load dimension, where an objective of performing evaluation by using this dimension is to evaluate occupation of an inter-node bandwidth by a job to which resources are allocated.

For example, nodes in Ki (for example, K1, K2, and K3) are traversed in sequence, and based on whether a current node can accommodate all tasks in a job, the nodes are classified into sets T1 and T2.

For example, nodes with same load may be combined based on a quantity of cross-node jobs, to form sets G1, G2, ..., and Gn.

In an embodiment, if a quantity of nodes in a Ki is 0, step S905 is performed.

For example, if a quantity of nodes in K1 is 0, it indicates that no task of a worker type included in a job is placed, and nodes in K2 are traversed, to query whether a node that accommodates a task of a PS type included in a job exists in K2. If a quantity of nodes in Ki is 0 after the nodes in Ki are traversed in sequence, the process ends.

S907: Perform evaluation from a cross-node network transmission load dimension, where an objective of performing evaluation by using this dimension is to evaluate occupation of an inter-node bandwidth by a job to which resources are allocated.

For example, nodes in Ti (for example, T1 and T2) may be traversed in sequence, and sorted based on network transmission load on a current node, for example, a quantity of cross-node jobs. In addition, nodes with same load may be combined to form sets G1, G2, ..., and Gn.

For example, if quantities of network transmission connections of a node 1, a node 2, and a node 3 are respectively 3, 3, and 2, each node may be separately evaluated from each dimension, that is, the node 1 to the node 3 may be separately evaluated from each dimension in sequence, or the node 1 and the node 2 with a same quantity of network transmission connections may be combined, and nodes with same load are combined to form sets, and then overall evaluation is performed. Accuracy of evaluation can be improved through overall evaluation.

In an embodiment, if a quantity of nodes in a Ti is 0, step S906 is performed.

For example, If T1 includes five nodes, after the five nodes in T1 are traversed, it is determined that no node that can accommodate all tasks in a job exists; if T1=0, step S906 is performed, and a plurality of nodes in T2 are traversed, to query whether a node that can accommodate all the tasks in the job exists; and if no node that can accommodate all the tasks in the job exists in Ti after the nodes in Ti are traversed in sequence, the process ends.

It should be noted that, for a specific implementation in step S906 and step S907, refer to step S833 shown in FIG. 8. Details are not described herein again.

S908: Perform evaluation from a big task dimension, where an objective of performing evaluation by using this dimension is to keep, to the greatest extent, completely idle GPU hosts, so that big tasks can be placed, to avoid resource fragmentation.

For example, nodes in Gi may be traversed in sequence, and sorted based on a quantity of GPUs allocated to the current node.

For example, one task may be placed in a node with a largest quantity of allocated GPUs, to avoid resource fragmentation.

It should be noted that, for a specific implementation in step S908, refer to step S834 and step S835 shown in FIG. 8. Details are not described herein again.

S909: Determine whether appropriate resources are selected for all tasks included in one job; if the appropriate resources are selected for all the tasks included in one job, perform step S910; or if the appropriate resources are not selected for all the tasks included in one job, perform step S902.

S910: Deliver the job.

For example, after the appropriate resources are selected for the job, the job is delivered to a corresponding node.

S911: Update the quantity of network transmission connections of the job on the node.

For example, after all tasks are selected and obtain corresponding resources, the quantity of network transmission connections of each node is updated, and the job starts to be operated.

It should be understood that, in the job scheduling method shown in FIG. 8, multi-dimensional determining needs to be performed on each candidate node in the candidate node set; and in the job scheduling method shown in FIG. 9, a first part of candidate nodes is selected based on a first dimension, and then a subset, namely, a second part of candidate nodes, is selected from the first part of candidate nodes based on a second dimension, and then a subset, namely, a third part of nodes is selected from the second part of candidate nodes based on a third selection dimension. Similarly, the foregoing plurality of selection dimensions are traversed and executed in sequence.

It should be noted that, in the job scheduling method, when preferential selection is performed, the weights of the dimensions may all be adjusted, provided that the foregoing overall objective is satisfied. To be specific, evaluation from the foregoing different dimensions may be mainly performed based on a network transmission bandwidth and from a perspective of resource fragmentation avoidance. When the network transmission bandwidth is considered, operation efficiency of the AI job can be improved; and when resource fragmentation is avoided, task placement may be considered, so that big resources are used for subsequent placement of big tasks, to improve overall utilization of resources.

It should be understood that the foregoing example descriptions are intended to help a person skilled in the art understand embodiments of this application, but are not intended to limit embodiments of this application to a specific value or a specific scenario in the examples. A person skilled in the art definitely can make various equivalent modifications or changes according to the examples described above, and the modifications or changes also fall within the scope of embodiments of this application.

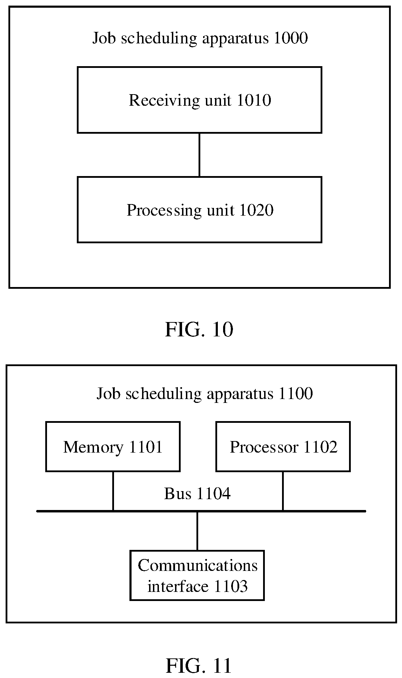

The foregoing describes the job scheduling method in embodiments of this application in detail with reference to FIG. 1 to FIG. 9. The following describes apparatus embodiments of this application in detail with reference to FIG. 10 and FIG. 11. It should be understood that, the job scheduling apparatus in embodiments of this application may perform various job scheduling methods in the foregoing embodiments of this application. For specific working processes of the following products, refer to corresponding processes in the foregoing method embodiments.

FIG. 10 is a schematic block diagram of a job scheduling apparatus 1000 according to an embodiment of this application.

It should be understood that, the job scheduling apparatus 1000 can perform the steps in the job scheduling method shown in FIG. 7 to FIG. 9. To avoid repetition, details are not described herein again. The job scheduling apparatus 1000 includes a receiving unit 1010 and a processing unit 1020.

The receiving unit 1010 is configured to: receive a target job, where the target job includes n tasks. The processing unit 1020 is configured to: separately perform node filtering in a node cluster based on the n tasks of the target job, to obtain n candidate node sets, where each candidate node set includes a plurality of candidate nodes; and select a candidate node with a highest network transmission performance score from an $m^{th}$ candidate node set corresponding to an $m^{th}$ task in the n tasks as a target node of the $m^{th}$ task, where the target node of the $m^{th}$ task is used to

process the m<sup>th</sup> task, the network transmission performance score is determined by one or any combination of an aggregation degree of the n tasks on a same rack, an affinity between the n tasks, a cross-node degree of the n tasks, and a node leisure degree, n is an integer greater than or equal to 1, and m is any positive integer between 1 and n.

Optionally, in an embodiment, a higher aggregation degree of the n tasks on the same rack indicates a higher network transmission performance score, and the processing unit 1020 is specifically configured to:

determine whether the n tasks can all be placed on a rack on which a candidate node in the m<sup>th</sup> candidate node set is located; and

if the n tasks can all be placed on the rack on which the candidate node in the m<sup>th</sup> candidate node set is located, increase a network transmission performance score of the candidate node; or

if the n tasks cannot all be placed on the rack on which the candidate node in the m<sup>th</sup> candidate node set is located, decrease the network transmission performance score of the candidate node.

Optionally, in an embodiment, a higher affinity between the n tasks indicates a higher network transmission performance score, and the processing unit 1020 is specifically configured to:

determine a type of the m<sup>th</sup> task; and

when the type of the m<sup>th</sup> task is a worker node task, determine whether another worker node task or a parameter node task in the n tasks needs to be placed in the candidate node in the m<sup>th</sup> candidate node set; and if the another worker node task or the parameter node task in the n tasks needs to be placed in the candidate node in the m<sup>th</sup> candidate node set, increase the network transmission performance score of the candidate node; or

when the type of the m<sup>th</sup> task is a parameter node task, determine whether a worker node task in the n tasks needs to be placed in the candidate node in the m<sup>th</sup> candidate node set; and if the worker node task in the n tasks needs to be placed in the candidate node in the m<sup>th</sup> candidate node set, increase the network transmission performance score of the candidate node; and determine whether another parameter node task in the n tasks needs to be placed in the candidate node in the m<sup>th</sup> candidate node set, and if the another parameter node task in the n tasks needs to be placed in the candidate node in the m<sup>th</sup> candidate node set, decrease the network transmission performance score of the candidate node.

Optionally, in an embodiment, the processing unit 1020 is specifically configured to:

determine a cross-node quantity of a candidate node in the m<sup>th</sup> candidate node set when the candidate node processes another job in an operating state, where

when the n tasks can all be placed in the candidate node, a larger cross-node quantity indicates a larger increasing amplitude for the network transmission performance score of the candidate node, and a smaller cross-node quantity indicates a smaller increasing amplitude for the network transmission performance score of the candidate node; or

when the n tasks cannot all be placed in the candidate node, a larger cross-node quantity indicates a smaller increasing amplitude for the network transmission performance score of the candidate node, and a smaller cross-node quantity indicates a larger increasing amplitude for the network transmission performance score of the candidate node.

Optionally, in an embodiment, a lower node leisure degree indicates a higher network transmission performance score, and the processing unit 1020 is specifically configured to:

determine whether hardware resources that are of a candidate node in the m<sup>th</sup> candidate node set and that are used for job training are used, and if the hardware resources are used, increase a network transmission performance score of the candidate node.

Optionally, in an embodiment, the processing unit 1020 is further configured to:

determine an allocation rate of the hardware resources that are of the candidate node in the m<sup>th</sup> candidate node set and that are used for job training; and

increase the network transmission performance score of the candidate node based on the allocation rate, where a higher allocation rate indicates a larger increasing amplitude for the network transmission performance score of the candidate node, and a lower allocation rate indicates a smaller increasing amplitude for the network transmission performance score of the candidate node.

Optionally, in an embodiment, each task of the target job carries a hardware resource requirement, and the processing unit 1020 is specifically configured to:

separately perform node filtering in the node cluster based on the hardware resource requirement carried in each task, to obtain the n candidate node sets, where hardware resources of each of the n candidate node sets match a hardware resource requirement carried in a corresponding task.

Optionally, in an embodiment, the target job includes a training job of an artificial intelligence model.

It should be understood that, the job scheduling apparatus 1000 herein is implemented in a form of functional units. The term "unit" herein may be implemented in a form of software and/or hardware. This is not specifically limited.

For example, "unit" may be a software program, a hardware circuit, or a combination thereof that implements the foregoing functions. The hardware circuit may include an application-specific integrated circuit (application-specific integrated circuit, ASIC), an electronic circuit, a processor (for example, a shared processor, a dedicated processor, or a group processor) and a memory that are configured to execute one or more software or firmware programs, a merged logic circuit, and/or another suitable component that supports the described functions.

Therefore, the units in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

FIG. 11 is a schematic diagram of a hardware structure of a job scheduling apparatus according to an embodiment of this application.

The job scheduling apparatus 1100 shown in FIG. 11 may include a memory 1101, a processor 1102, a communications interface 1103, and a bus 1104. A communication connection is implemented between the memory 1101, the processor 1102, and the communications interface 1103 through the bus 1104.

The memory 1101 may be a read-only memory (read-only memory, ROM), a static storage device, or a random access memory (random access memory, RAM). The memory 1101 may store programs. When the programs stored in the memory 1101 are executed by the processor 1102, the processor 1102 and the communications interface 1103 are configured to perform the steps of the job scheduling method in embodiments of this application, for example, may perform the steps of the job scheduling method shown in FIG. 7 to FIG. 9.

The processor 1102 may be a general-purpose CPU, a microprocessor, an ASIC, a GPU, or one or more integrated circuits, configured to execute related programs, to implement functions that need to be performed by units in the job scheduling apparatus shown in FIG. 10 in embodiments of this application, or perform the job scheduling method in the method embodiments of this application.

The processor 1102 may be alternatively an integrated circuit chip and has a signal processing capability. In an implementation process, the steps of the job scheduling method in embodiments of this application may be completed by using an integrated logic circuit of hardware in the processor 1102 or instructions in a software form.

The foregoing processor 1102 may be alternatively a general-purpose processor, a DSP, an ASIC, an FPGA or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1101, and the processor 1102 reads information in the memory 1101, and completes, in combination with hardware of the processor 1102, functions that need to be performed by the units included in the job scheduling apparatus in embodiments of this application, or performs the job scheduling method in the method embodiments of this application.

For example, the processor 1102 may correspond to the processing unit 1020 in the job scheduling apparatus shown in FIG. 10.

The communications interface 1103 uses a transceiver apparatus, for example, but not limited to a transceiver, to implement communication between the job scheduling apparatus 1100 and another device or a communications network.

For example, the communications interface 1103 may correspond to the receiving unit 1010 in the job scheduling apparatus 1000 shown in FIG. 10, and a resource request of the target job may be received by using the communications interface 1103.

The bus 1104 may include a path that transmits information between various components (for example, the memory 1101, the processor 1102, and the communications interface 1103) of the job scheduling apparatus 1100.

It should be noted that, although the job scheduling apparatus 1100 shows only the memory, the processor, and the communications interface, in a specific implementation process, a person skilled in the art should understand that the job scheduling apparatus 1100 may further include another component required for implementing normal operation. In addition, based on a specific requirement, a person skilled in the art should understand that, the job scheduling apparatus 1100 may further include a hardware component that implements another additional function. In addition, a person skilled in the art should understand that, the job scheduling apparatus 1100 may alternatively include only components required for implementing embodiments of this application, but does not need to include all components shown in FIG. 11.

An embodiment of this application further provides a chip, and the chip includes a transceiver unit and a processing unit. The transceiver unit may be an input/output circuit or a communications interface. The processing unit is a processor, a microprocessor, or an integrated circuit integrated on the chip. The chip may perform the job scheduling method in the foregoing method embodiments.

An embodiment of this application further provides a computer-readable storage medium, where the computer-readable storage medium stores instructions, and when the instructions are executed, the job scheduling method in the foregoing method embodiments is performed.

An embodiment of this application further provides a computer program product including instructions. When the instructions are executed, the job scheduling method in the foregoing method embodiments is performed.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, random access memories (random access memory, RAM) in various forms are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When the software is used to implement the embodiments, all or some of the foregoing embodiments may be implemented in a form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. A specific meaning depends on a context.

In this application, "at least one" refers to one or more, and "a plurality of" refers to two or more. The term "at least one (piece) of the following" or a similar expression thereof means any combination of these items, including any combination of one item (piece) or a plurality of items (pieces). For example, at least one (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the units and algorithm steps in the examples described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A job scheduling method, comprising:

   receiving a target job, wherein the target job comprises n tasks;
   separately performing node filtering in a node cluster based on the n tasks of the target job, to obtain n candidate node sets, wherein each candidate node set comprises a plurality of candidate nodes; and
   selecting a candidate node with a highest network transmission performance score from an $m^{th}$ candidate node set corresponding to an $m^{th}$ task in the n tasks as a target node of the $m^{th}$ task, wherein the target node of the $m^{th}$ task is used to process the $m^{th}$ task, the network transmission performance score is determined by one or any combination of an aggregation degree of the n tasks on a same rack, an affinity between the n tasks, a cross-node degree of the n tasks, and a node leisure degree, n is an integer greater than or equal to 1, and m is any positive integer between 1 and n.

2. The method according to claim 1, wherein a higher aggregation degree of the n tasks on the same rack indicates a higher network transmission performance score, and the selecting a candidate node with a highest network transmission performance score from an $m^{th}$ candidate node set corresponding to an $m^{th}$ task in the n tasks as a target node of the $m^{th}$ task comprises:

determining whether the n tasks can all be placed on a rack on which a candidate node in the m$^{th}$ candidate node set is located; and

if the n tasks can all be placed on the rack on which the candidate node in the m$^{th}$ candidate node set is located, increasing a network transmission performance score of the candidate node; or

if the n tasks cannot all be placed on the rack on which the candidate node in the m$^{th}$ candidate node set is located, decreasing a network transmission performance score of the candidate node.

3. The method according to claim 1, wherein a higher affinity between the n tasks indicates a higher network transmission performance score, and the selecting a candidate node with a highest network transmission performance score from an m$^{th}$ candidate node set corresponding to an m$^{th}$ task in the n tasks as a target node of the m$^{th}$ task comprises:

determining a type of the m$^{th}$ task; and

when the type of the m$^{th}$ task is a worker node task, determining whether another worker node task or a parameter node task in the n tasks needs to be placed in a candidate node in the m$^{th}$ candidate node set; and if the another worker node task or the parameter node task in the n tasks needs to be placed in the candidate node in the m$^{th}$ candidate node set, increasing a network transmission performance score of the candidate node; or

when the type of the m$^{th}$ task is a parameter node task, determining whether a worker node task in the n tasks needs to be placed in a candidate node in the m$^{th}$ candidate node set, and if the worker node task in the n tasks needs to be placed in the candidate node in the m$^{th}$ candidate node set, increasing a network transmission performance score of the candidate node; and determining whether another parameter node task in the n tasks needs to be placed in the candidate node, and if the another parameter node task in the n tasks needs to be placed in the candidate node, decreasing the network transmission performance score of the candidate node.

4. The method according to claim 1, wherein the selecting a candidate node with a highest network transmission performance score from an m$^{th}$ candidate node set corresponding to an m$^{th}$ task in the n tasks as a target node of the m$^{th}$ task comprises:

determining a cross-node quantity of a candidate node in the m$^{th}$ candidate node set when the candidate node processes another job in an operating state, wherein

when the n tasks can all be placed in the candidate node, a larger cross-node quantity indicates a larger increasing amplitude for a network transmission performance score of the candidate node, and a smaller cross-node quantity indicates a smaller increasing amplitude for the network transmission performance score of the candidate node; or

when the n tasks cannot all be placed in the candidate node, a larger cross-node quantity indicates a smaller increasing amplitude for a network transmission performance score of the candidate node, and a smaller cross-node quantity indicates a larger increasing amplitude for the network transmission performance score of the candidate node.

5. The method according to claim 1, wherein a lower node leisure degree indicates a higher network transmission performance score, and the selecting a candidate node with a highest network transmission performance score from an m$^{th}$ candidate node set corresponding to an m$^{th}$ task in the n tasks as a target node of the m$^{th}$ task comprises: determining whether hardware resources that are of a candidate node in the m$^{th}$ candidate node set and that are used for job training are used, and if the hardware resources are used, increasing a network transmission performance score of the candidate node.

6. The method according to claim 5, wherein the selecting a candidate node with a highest network transmission performance score from an m$^{th}$ candidate node set corresponding to an m$^{th}$ task in the n tasks as a target node of the m$^{th}$ task further comprises:

determining an allocation rate of the hardware resources that are of the candidate node in the m$^{th}$ candidate node set and that are used for job training; and

increasing the network transmission performance score of the candidate node based on the allocation rate, wherein a higher allocation rate indicates a larger increasing amplitude for the network transmission performance score of the candidate node, and a lower allocation rate indicates a smaller increasing amplitude for the network transmission performance score of the candidate node.

7. The method according to any one of claims 1 to 6, wherein each task of the target job carries a hardware resource requirement, and the separately performing node filtering in a node cluster based on the n tasks of the target job, to obtain n candidate node sets comprises:
separately performing node filtering in the node cluster based on the hardware resource requirement carried in each task, to obtain the n candidate node sets, wherein hardware resources of each of the n candidate node sets match a hardware resource requirement carried in a corresponding task.

8. The method according to any one of claims 1 to 7, wherein the target job comprises a training job of an artificial intelligence model.

9. A job scheduling apparatus, comprising:

a receiving unit, configured to receive a target job, wherein the target job comprises n tasks; and
a processing unit, configured to: separately perform node filtering in a node cluster based on the n tasks of the target job, to obtain n candidate node sets, wherein each candidate node set comprises a plurality of candidate nodes; and select a candidate node with a highest network transmission performance score from an $m^{th}$ candidate node set corresponding to an $m^{th}$ task in the n tasks as a target node of the $m^{th}$ task, wherein the target node of the $m^{th}$ task is used to process the $m^{th}$ task, the network transmission performance score is determined by one or any combination of an aggregation degree of the n tasks on a same rack, an affinity between the n tasks, a cross-node degree of the n tasks, and a node leisure degree, n is an integer greater than or equal to 1, and m is any positive integer between 1 and n.

10. The job scheduling apparatus according to claim 9, wherein a higher aggregation degree of the n tasks on the same rack indicates a higher network transmission performance score, and the processing unit is specifically configured to:

determine whether the n tasks can all be placed on a rack on which a candidate node in the $m^{th}$ candidate node set is located; and
if the n tasks can all be placed on the rack on which the candidate node in the $m^{th}$ candidate node set is located, increase a network transmission performance score of the candidate node; or
if the n tasks cannot all be placed on the rack on which the candidate node in the $m^{th}$ candidate node set is located, decrease a network transmission performance score of the candidate node.

11. The job scheduling apparatus according to claim 9, wherein a higher affinity between the n tasks indicates a higher network transmission performance score, and the processing unit is specifically configured to:

determine a type of the $m^{th}$ task; and
when the type of the $m^{th}$ task is a worker node task, determine whether another worker node task or a parameter node task in the n tasks needs to be placed in a candidate node in the $m^{th}$ candidate node set; and if the another worker node task or the parameter node task in the n tasks needs to be placed in the candidate node in the $m^{th}$ candidate node set, increase a performance score of the candidate node; or
when the type of the $m^{th}$ task is a parameter node task, determine whether a worker node task in the n tasks needs to be placed in a candidate node in the $m^{th}$ candidate node set, and if the worker node task in the n tasks needs to be placed in the candidate node in the $m^{th}$ candidate node set, increase a network transmission performance score of the candidate node; and determine whether another parameter node task in the n tasks needs to be placed in the candidate node, and if the another parameter node task in the n tasks needs to be placed in the candidate node, decrease the network transmission performance score of the candidate node.

12. The job scheduling apparatus according to claim 9, wherein the processing unit is specifically configured to:

determine a cross-node quantity of a candidate node in the $m^{th}$ candidate node set when the candidate node processes another job in an operating state, wherein
when the n tasks can all be placed in the candidate node, a larger cross-node quantity indicates a larger increasing amplitude for a network transmission performance score of the candidate node, and a smaller cross-node quantity indicates a smaller increasing amplitude for the network transmission performance score of the candidate node; or
when the n tasks cannot all be placed in the candidate node, a larger cross-node quantity indicates a smaller increasing amplitude for a network transmission performance score of the candidate node, and a smaller cross-node quantity indicates a larger increasing amplitude for the network transmission performance score of the candidate node.

**13.** The job scheduling apparatus according to claim 9, wherein a lower node leisure degree indicates a higher network transmission performance score, and the processing unit is specifically configured to:
determine whether hardware resources that are of a candidate node in the $m^{th}$ candidate node set and that are used for job training are used, and if the hardware resources are used, increase a network transmission performance score of the candidate node.

**14.** The job scheduling apparatus according to claim 13, wherein the processing unit is further configured to:

determine an allocation rate of the hardware resources that are of the candidate node in the $m^{th}$ candidate node set and that are used for job training; and
increase the network transmission performance score of the candidate node based on the allocation rate, wherein a higher allocation rate indicates a larger increasing amplitude for the network transmission performance score of the candidate node, and a lower allocation rate indicates a smaller increasing amplitude for the performance score of the candidate node.

**15.** The job scheduling apparatus according to any one of claims 9 to 14, wherein each task of the target job carries a hardware resource requirement, and the processing unit is specifically configured to:
separately perform node filtering in the node cluster based on the hardware resource requirement carried in each task, to obtain the n candidate node sets, wherein hardware resources of each of the n candidate node sets match a hardware resource requirement carried in a corresponding task.

**16.** The job scheduling apparatus according to any one of claims 9 to 15, wherein the target job comprises a training job of an artificial intelligence model.

**17.** A job scheduling apparatus, comprising a processor, a memory, and a communications interface, wherein the memory is configured to store computer-executable instructions, and when the job scheduling apparatus runs, the processor runs the computer-executable instructions in the memory to perform the job scheduling method according to any one of claims 1 to 8.

**18.** A computer-readable storage medium, comprising a computer program, wherein when the computer program is run on a computer, the computer is enabled to perform the job scheduling method according to any one of claims 1 to 8.

FIG. 1

FIG. 2

FIG. 3

Receive  Worker node  Send
401

Send

Worker node
405

Receive

Send

Receive  Worker node
402

Send

Receive  Worker node
403

Send

Worker node  Receive  Send
404

FIG. 4

| | | |
|---|---|---|
| AI training job | AI training job | AI training job |

Graphical user interface/Client 510

AI job management service 520

| Job submission | Job management |
|---|---|

Resource management service 530

| Resource management | Scheduler |
|---|---|

Hardware infrastructure 540

| CPU | Memory | Network | RDMA | GPU |
|---|---|---|---|---|

FIG. 5

First-level switch 610

Second-level switch 620

...

Second-level switch 630

Rack 1

CPU 621 — CPU 622

GPU GPU
GPU GPU

GPU GPU
GPU GPU

...

CPU 623 — CPU 624

GPU GPU
GPU GPU

GPU GPU
GPU GPU

Server 621

Server 622

Rack 2

CPU 631 — CPU 632

GPU GPU
GPU GPU

GPU GPU
GPU GPU

...

CPU 633 — CPU 634

GPU GPU
GPU GPU

GPU GPU
GPU GPU

Server 631

Server 632

FIG. 6

700

Receive a target job — S710

Separately perform node filtering in a node cluster based on n tasks of the target job, to obtain n candidate node sets, where each candidate node set includes a plurality of candidate nodes — S720

Select a candidate node with a highest network transmission performance score from an $m^{th}$ candidate node set corresponding to an $m^{th}$ task in the n tasks as a target node of the $m^{th}$ task — S730

FIG. 7

| | | | |
|---|---|---|---|
| Parse all tasks included in a job, and sequentially select target nodes for the tasks — S810 | | Perform scoring based on an ID of a rack on which the candidate node is located, where a weight is W1 — S831 | |
| ↓ | | | |
| Perform preselection based on a hardware resource requirement of a task d, to select all candidate nodes that meet a condition — S820 | | Perform scoring based on an affinity requirement between tasks placed on the candidate node, where a weight is W2 — S832 | |
| ↓ | | | |
| Traverse all the candidate nodes, perform scoring based on weight values of different dimensions, and multiply a score by a weight to obtain a network transmission performance score of a final candidate node — S830 | | Perform scoring based on a quantity of cross-node network transmission connections of a job placed on the candidate node, where a weight is W3 — S833 | |
| ↓ | | | |
| Select, based on a score of each candidate node, a candidate node to place a selected task — S840 | | Perform scoring based on whether a hardware resource of a task has been allocated on the candidate node, where a weight is W4 — S834 | |
| ↓ | | Perform scoring based on a remaining hardware resource on the candidate node, where a weight is W5 — S835 | |

No → Target nodes are selected for all tasks included in one job — S850

↓ Yes

Deliver the job — S860

↓

Update a quantity of network transmission connections of the job on the node — S870

FIG. 8

| | |
|---|---|
| Parse all tasks included in a job, and sequentially select nodes for the tasks | S901 |

| | |
|---|---|
| Select a task, and perform preselection based on a task requirement, to select all nodes N1 that meet a condition | S902 |

| | |
|---|---|
| Find a rack set to which a node in the node set N1 belongs | S903 |

| | |
|---|---|
| Rack dimension selection: sort racks in the rack set, and perform traversing in sequence | S904 |

| | |
|---|---|
| Affinity dimension selection: traverse all nodes in the node set N1 in sequence and sort the nodes into K1, K2, and K3 according to an affinity rule | S905 |

If Ki=0

| | |
|---|---|
| Cross-node network transmission load dimension selection: traverse nodes in Ki in sequence and classify the nodes into T1 and T2 based on whether a current node can accommodate all the tasks in the job | S906 |

If Ti=0

| | |
|---|---|
| Cross-node network transmission load dimension selection: traverse nodes in Ti in sequence and perform sorting based on network transmission load on the nodes | S907 |

| | |
|---|---|
| Big task dimension selection: perform sorting based on quantities of allocated GPUs on the nodes | S908 |

No

Nodes are selected for all tasks included in one job — S909

Yes

| | |
|---|---|
| Deliver the job | S910 |

| | |
|---|---|
| Update a quantity of network transmission connections of the job on the node | S911 |

FIG. 9

Job scheduling apparatus 1000

Receiving unit 1010

Processing unit 1020

FIG. 10

Job scheduling apparatus 1100

Memory 1101

Processor 1102

Bus 1104

Communications
interface 1103

FIG. 11

## INTERNATIONAL SEARCH REPORT

| International application No. |
| --- |
| **PCT/CN2020/129971** |

**A. CLASSIFICATION OF SUBJECT MATTER**

G06F 9/50(2006.01)i

According to International Patent Classification (IPC) or to both national classification and IPC

**B. FIELDS SEARCHED**

Minimum documentation searched (classification system followed by classification symbols)

G06F; H04L

Documentation searched other than minimum documentation to the extent that such documents are included in the fields searched

Electronic data base consulted during the international search (name of data base and, where practicable, search terms used)

CNPAT, WPI, EPODOC, CNKI: 评分, 得分, 分数, 任务, 候选, 节点, 亲和, 空闲, 负载, 作业, 调度, grade, score, task, candidate, node, affiliation, idle, load, busywork, schedule

**C. DOCUMENTS CONSIDERED TO BE RELEVANT**

| Category* | Citation of document, with indication, where appropriate, of the relevant passages | Relevant to claim No. |
| --- | --- | --- |
| X | CN 110008024 A (GUANGXI UNIVERSITY) 12 July 2019 (2019-07-12) description, paragraphs 2-37, 69-151 | 1-18 |
| A | CN 105808634 A (INTERNATIONAL BUSINESS MACHINES CORPORATION) 27 July 2016 (2016-07-27) entire document | 1-18 |
| A | CN 105847358 A (Guangdong Sanmeng Information Technology Co., Ltd.) 10 August 2016 (2016-08-10) entire document | 1-18 |
| A | US 2014359624 A1 (HEWLETT-PACKARD DEVELOPMENT COMPANY, L.P.) 04 December 2014 (2014-12-04) entire document | 1-18 |
| A | CN 109997124 A (GOOGLE INC.) 09 July 2019 (2019-07-09) entire document | 1-18 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 January 2021** | **20 February 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/129971**

| Patent document cited in search report | | | Publication date (day/month/year) | Patent family member(s) | | | Publication date (day/month/year) |
|---|---|---|---|---|---|---|---|
| CN | 110008024 | A | 12 July 2019 | None | | | |
| CN | 105808634 | A | 27 July 2016 | WO | 2016113153 | A1 | 21 July 2016 |
| | | | | US | 2016212007 | A1 | 21 July 2016 |
| CN | 105847358 | A | 10 August 2016 | None | | | |
| US | 2014359624 | A1 | 04 December 2014 | None | | | |
| CN | 109997124 | A | 09 July 2019 | JP | 2019533219 | A | 14 November 2019 |
| | | | | KR | 20190037300 | A | 05 April 2019 |
| | | | | US | 2018113933 | A1 | 26 April 2018 |
| | | | | WO | 2018081014 | A1 | 03 May 2018 |
| | | | | EP | 3482311 | A1 | 15 May 2019 |

Form PCT/ISA/210 (patent family annex) (January 2015)

**EP 4 057 142 A1**

**REFERENCES CITED IN THE DESCRIPTION**

**Patent documents cited in the description**

- CN 201911253271
- CN 202010407994